# EUROPEAN PATENT SPECIFICATION

(11) **EP 3 071 583 B1**
(45) Date of publication and mention of the grant of the patent: **09.05.2018**
(21) Application number: 14815498.2
(22) Date of filing: 19.11.2014
(51) Int. Cl.: C07F 15/06, C07F 7/08, C07F 7/18

(54) **DEHYDROGENATIVE SILYLATION, HYDROSILYLATION AND CROSSLINKING USING COBALT CATALYSTS**
DEHYDRIERENDE SILYLIERUNG, HYDROSILYLIERUNG UND VERNETZUNG UNTER VERWENDUNG VON KOBALTKATALYSATOREN
SILYLATION DÉSHYDROGÉNANTE, HYDROSILYLATION ET RÉTICULATION À L'AIDE DE CATALYSEURS AU COBALT

(30) Priority: 19.11.2013 US 201361906210 P; 06.05.2014 US 201414270710
(43) Date of publication of application: 28.09.2016
(73) Proprietor: Momentive Performance Materials Inc., Waterford, NY 12188 (US); Princeton University, Princeton, NJ 08544 (US)
(72) Inventor: DIAO, Tianning, New York, New York 10003 (US); CHIRIK, Paul J., Princeton, New Jersey 08544 (US); ROY, Aroop Kumar, Mechanicville, New York 12118 (US); LEWIS, Kenrick, Flushing New York 11358 (US); NYE, Susan, Feura Bush, New York 12067 (US); WELLER, Keith J., Mequon, WI 53092-1914 (US); DELIS, Johannes G.P., 4617 NJ Bergen op Zoom (NL); YU, Renyuan, Beijing 101100 (CN)
(74) Representative: Müller-Boré & Partner Patentanwälte PartG mbB
(86) International application number: PCT/US2014/066338
(87) International publication number: WO 2015/077298

(56) References cited:
- WO-A1-2015/023328
- WO-A1-2015/077302
- US-A1- 2011 009 565
- KNIJNENBURG Q ET AL: "Olefin hydrogenation using diimine pyridine complexes of Co and Rh", JOURNAL OF MOLECULAR CATALYSIS A: CHEMICAL, ELSEVIER, AMSTERDAM, NL, vol. 232, no. 1-2, 3 May 2005 (2005-05-03) , pages 151-159, XP027658306, ISSN: 1381-1169 [retrieved on 2005-05-03]

## Description

This invention relates generally to transition metal-containing compounds, more specifically to cobalt complexes containing pyridine di-imine ligands and their use as efficient dehydrogenative silylation and crosslinking catalysts.

Hydrosilylation chemistry, typically involving a reaction between a silyl hydride and an unsaturated organic group, is the basis for synthetic routes to produce commercial silicone-based products like silicone surfactants, silicone fluids and silanes as well as many addition cured products like sealants, adhesives, and silicone-based coating products. See, for example, US Patent Application Publication 2011/0009573A1 to Delis et al. Typical hydrosilylation reactions use precious metal catalysts to catalyze the addition of a silyl-hydride (Si-H) to an unsaturated group, such as an olefin. In these reactions, the resulting product is a silyl-substituted, saturated compound. In most of these cases, the addition of the silyl group proceeds in an anti-Markovnikov manner, *i.e.,* to the less substituted carbon atom of the unsaturated group. Most precious metal catalyzed hydrosilylations only work well with terminally unsaturated olefins, as internal unsaturations are generally non-reactive or only poorly reactive. There are currently only limited methods for the general hydrosilylation of olefins where after the addition of the Si-H group there still remains an unsaturation in the original substrate. This reaction, termed a dehydrogenative silylation, has potential uses in the synthesis of new silicone materials, such as silanes, silicone fluids, crosslinked silicone elastomers, and silylated or silicone-crosslinked organic polymers such as polyolefins, unsaturated polyesters, and the like.

Various precious metal catalysts are known in the art. For example, US Patent No. 3,775,452 discloses a platinum complex containing unsaturated siloxanes as ligands. This type of catalyst is known as Karstedt's catalyst. Other exemplary platinum-based hydrosilylation catalysts that have been described in the literature include Ashby's catalyst as disclosed in US Patent No. 3,159,601, Lamoreaux's catalyst as disclosed in US Patent No. 3,220,972 , and Speier's catalyst as disclosed in Speier, J.L, Webster J.A. and Barnes G.H., J. Am. Chem. Soc. 79, 974 (1957).

There are examples of the use of Fe(CO)₅ to promote limited hydrosilylations and dehydrogenative silylations. (See Nesmeyanov, A. N.; Freidlina, R. Kh.; Chukovskaya, E. C.; Petrova, R. G.; Belyavsky, A. B. Tetrahedron 1962, 17, 61 and Marciniec, B.; Majchrzak, M. Inorg. Chem. Commun. 2000, 3, 371). The use of Fe3(CO)₁₂ was also found to exhibit dehydrogenative silylation in the reaction of Et₃SiH and styrene. (Kakiuchi, F.; Tanaka, Y.; Chatani, N.; Murai, S. J. Organomet.Chem. 1993, 456, 45). Also, several cyclopentadiene iron complexes have been used to varying degrees of success, with the work of *Nakazawa, et al* showing interesting intramolecular dehydrogenative silylation/hydrogenation when used with 1,3-di-vinyldisiloxanes. (Roman N Naumov, Masumi Itazaki, Masahiro Kamitani, and Hiroshi Nakazawa, Journal of the American Chemical Society, 2012, Volume 134, Issue 2, Pages 804-807).

A rhodium complex was found to give low to moderate yields of allyl-silanes and vinyl silanes. (Doyle, M.P.; Devora G. A.; Nevadov, A. O.; High, K. G. Organometallics, 1992, 11, 540-555). An iridium complex was also found to give vinyl silanes in good yields. (Falck, J. R.; Lu, B, J. Org Chem, 2010, 75, 1701-1705.) Allyl silanes could be prepared in high yields using a rhodium complex (Mitsudo, T.; Watanabe, Y.; Hori, Y. Bull. Chem. Soc. Jpn. 1988, 61, 3011-3013). Vinyl silanes could be prepared through the use of a rhodium catalyst (Murai, S.; Kakiuchi, F.; Nogami, K.; Chatani, N.; Seki, Y. Organometallics, 1993, 12, 4748-4750). Dehydrogenative silylation was found to occur when iridium complexes were used (Oro, L. A.; Fernandez, M. J.; Esteruelas, M. A.; Jiminez, M. S. J. Mol. Catalysis, 1986, 37, 151-156 and Oro, L. A.; Fernandez, M. J.; Esteruelas, M. A.; Jiminez, M. S. Organometallics, 1986, 5, 1519-1520). Vinyl silanes could also be produced using ruthenium complexes (Murai, S.; Seki, Y.; Takeshita, K.; Kawamoto, K.; Sonoda, N. J. Org. Chem. 1986, 51, 3890-3895.).

A palladium-catalyzed silyl-Heck reaction was recently reported to result in the formation of allyl-silanes and vinyl silanes (McAtee JR, et al., Angewandte Chemie, International Edition in English (March 1, 2012); McAtee, JR et al., J. Am. Chem. Soc. 2014, 136, 10166).

US Patent No. 5,955,555 discloses the synthesis of certain iron or cobalt pyridine di-imine (PDI) complexes bearing two ionic ligands. The preferred anions are chloride, bromide and tetrafluoroborate. US Patent No. 7,442,819 discloses iron and cobalt complexes of certain tricyclic ligands containing a "pyridine" ring substituted with two imino groups. US Patent Nos. 6,461,994, 6,657,026 and 7,148,304 disclose several catalyst systems containing certain transitional metal-PDI complexes. US Patent No. 7,053,020 discloses a catalyst system containing, inter alia, one or more bisarylimino pyridine iron or cobalt catalyst. Chirik et al describe bisarylimino pyridine cobalt complexes with anionic ligands (Inorg. Chem. 2010, 49, 6110 and JACS. 2010, 132, 1676.) However, the catalysts and catalyst systems disclosed in these references are described for use in the context of olefin hydrogenation, polymerizations and/or oligomerisations, not in the context of dehydrogenative silylation reactions. Pyridine(di)imine cobalt methyl complexes with N-alkyl substituents have been reported to give mixtures of hydrosilylation and dehydrogenative silylation products when reacted with silylhydrides and excess olefin (Atienza, C. C. H. A, PhD thesis (2013), Princeton University). Certain derivatives of pyridine(di)imine cobalt methyl complexes with N-alkyl substituents have proven challenging to synthesize thus necessitating the production of pre-catalysts such as pyridine(di)imine cobalt neosilyl complexes.
US 2011/0009565 A1 discloses metal-terpyridine complexes and their use in hydrosilylation reactions. There are also known olefin hydrogenation reactions using diimine pyridine complexes of Co and Rh (Knijnenburg Q, et al., J. Mol. Catal. A: Chem. 2005, 232, 151). WO 2015/077302 A1 describes cobalt complexes containing pyridine di-imine ligands and chelating alkenyl-modified silyl ligands and their use as hydrosilylation and/or dehydrogenative silylation and crosslinking catalysts. WO 2015/023328 A1 discloses reusable homogeneous cobalt pyridine diimine catalysts for dehydrogenative silylation and tandem dehydrogenative -silylation-hydrogenation.

There is a continuing need in the silylation industry for non-precious metal-based catalysts that are effective for efficiently catalyzing dehydrogenative silylations and/or hydrosilylation. The present invention provides one answer to that need.

Further, many industrially important homogeneous metal catalysts suffer from the drawback that following consumption of the first charge of substrates, the catalytically active metal is lost to aggregation and agglomeration whereby its catalytic properties are substantially diminished via colloid formation or precipitation. This is a costly loss, especially for noble metals such as Pt. Heterogeneous catalysts are used to alleviate this problem but have limited use for polymers and also have lower activity than homogeneous counterparts. For example, it is well-known in the art and in the hydrosilylation industry that the two primary homogeneous catalysts, Speier's and Karstedt's, often lose activity after catalyzing a charge of olefin and silyl- or siloxyhydride reaction. If one charge of the homogeneous catalyst could be re-used for multiple charges of substrates, then catalyst and process cost advantages would be significant.

In one aspect, the present invention is directed to a process for producing a silylated product comprising reacting a mixture comprising (a) an unsaturated compound containing at least one unsaturated functional group, (b) a silyl hydride containing at least one silylhydride functional group, and (c) a catalyst, optionally in the presence of a solvent, to produce a dehydrogenative silylated product, a hydrosilylated product, or a combination of a dehydrogenative silylated product and a hydrosilylated product, wherein the catalyst is a complex of the Formula (I); 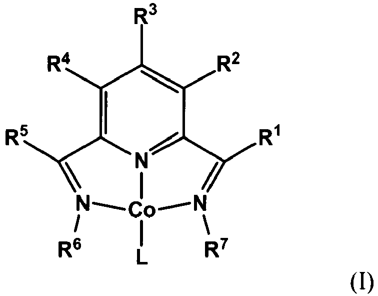
wherein each occurrence of R¹, R², R³, R⁴, and R⁵ is independently hydrogen, a C1-C18 alkyl, a C1-C18 cycloalkyl, a C1-C18 substituted alkyl, a C1-C18 substituted cycloalkyl, an aryl, a substituted aryl, or an inert substituent chosen from a halo or an ether including -OR⁹ wherein R⁹ is hydrocarbyl or substituted hydrocarbyl, R¹-R⁵, other than hydrogen, optionally contain at least one heteroatom, wherein the term substituted means containing one or more substituents, chosen from a halo or an ether including -OR⁹ wherein R⁹ is hydrocarbyl;
each occurrence of R⁶ and R⁷ is independently a C1-C18 alkyl, a C1-C18 cycloalkyl, a C1-C 18 substituted alkyl, a C1-C18 substituted cycloalkyl, an aryl, or a substituted aryl, wherein R⁶ and R⁷ optionally contain at least one heteroatom, wherein the term substituted means containing one or more substituents, chosen from a halo or an ether including -OR⁹ wherein R⁹ is hydrocarbyl;
optionally any two of R¹, R², R³, R⁴, R⁵, R⁶, and R⁷ vicinal to one another taken together may form a ring being an unsubstituted, saturated, or unsaturated cyclic structure, and
L is CH₂SiR⁸₃ where each occurrence of R⁸ is independently a C1-10 alkyl, a C1-10 cycloalkyl or an aryl group, where R⁸ optionally contains at least one heteroatom.

In one embodiment, R⁸ is CH₃.

In one embodiment, R⁶ and R⁷ are independently chosen from a C1-C10 alkyl or a C1-10 cycloalkyl. In one embodiment, R⁶ and R⁷ are the same, chosen from either methyl, ethyl or cyclohexyl.

In one embodiment, R⁸ is methyl; R⁶ and R⁷ are independently chosen from a C1-C10 alkyl or a C1-10 cycloalkyl, and R², R³, and R⁴ are each hydrogen.

In one embodiment, the catalyst is chosen from: 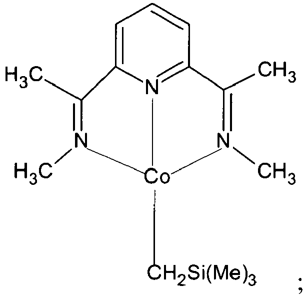 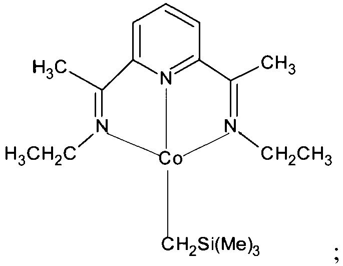 and 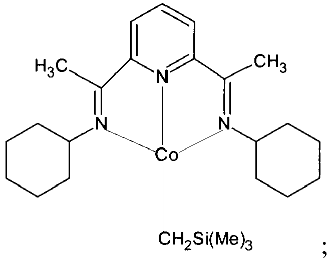 or a combination of two or more thereof.

In one embodiment, component (a) is chosen from an olefin, a cycloalkene, an unsaturated polyether, a vinyl-functional alkyl-capped allyl or methallyl polyether, a vinyl-functional cycloalkyl-capped allyl or methallyl polyether, an alkyl-capped terminally unsaturated amine, a cycloalkyl-capped terminally unsaturated amine, an alkyne, a terminally unsaturated acrylate or methacrylate, an unsaturated aryl ether, a vinyl-functionalized polymer or oligomer, a vinyl-functionalized silane, a vinyl-functionalized silicone, an unsaturated fatty acid, an unsaturated ester, or a combination of two or more thereof.

In one embodiment, component (a) is chosen from a compound of the formula:

R¹⁰(OCH₂CH₂)_{z}(OCH₂CHR¹¹)_{w}-OR¹²;

R¹²O(CHR¹¹CH²O)_{w}(CH²CH²O)_{z}-CR¹³2-C≡C-CR¹³₂-(OCH₂CH₂)_{z}(OCH₂CHR¹¹)_{w}R¹²;

H₂C=CR¹¹CH₂O(CH₂CH₂O)_{z}(CH₂CHR¹¹)_{w}CH₂CR¹³=CH₂;

or a combination of two or more thereof, wherein R¹⁰ is chosen from an unsaturated organic group containing from 2 to 10 carbon atoms; R¹² is chosen from hydrogen, a vinyl group, or a polyether capping group of from 1 to 8 carbon atoms; each occurrence of R¹¹ is independently chosen from a monovalent hydrocarbon group having 1-20 carbon atoms, an aryl group, an alkaryl, an aralkyl, a cycloalkyl group; each occurrence of R¹³ is independently chosen from hydrogen, a monovalent hydrocarbon group having 1-20 carbon atoms, an aryl group, an alkaryl group, an aralkyl group, or a cycloalkyl group; each occurrence of z is 0 to 100 inclusive; and, each occurrence of w is 0 to 100 inclusive, or component (a) is chosen from N,N-dimethylallyl amine, allyloxy-substituted polyethers, propylene, 1-butene, 1-hexene, styrene,, vinylnorbornane, 5-vinyl-norbornene, 1-octadecene, cyclopentene, cyclohexene, norbornene, 3-hexene, isobutylene, 3-methyl-1-octene, polybutadiene, polyisoprene, EPDM, oleic acid, linoleic acid, methyl oleate, a vinyl siloxane of the Formula VI, 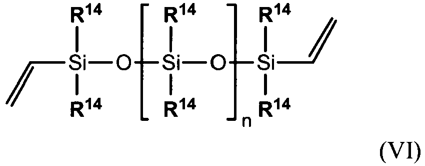 or a combination of two or more thereof, wherein each occurrence of R¹⁴ is independently a C1-C18 alkyl, a C1-C18 cycloalkyl, C1-C18 substituted alkyl, a C1-C18 substituted cycloalkyl, vinyl, aryl, or a substituted aryl, and n is greater than or equal to zero, wherein the term substituted means containing one or more substituents, chosen from a halo or an ether including -OR⁹ wherein R⁹ is hydrocarbyl.

In one embodiment, component (b) is chosen from a compound of the formula RₐSiH₄₋ₐ, (RO)ₐSiH₄₋ₐ, HSiRₐ(OR)₃₋ₐ, R₃Si(CH₂)_{f}(SiR₂O)ₖSiR₂H, (RO)₃Si(CH₂)_{f}(SiR₂O)ₖSiR₂H, QᵤTᵥTₚ^{H}D_{w}D^{H}ₓM^{H}_{y}M_{z}, R₃Si(CH₂R)ₓSiOSiR₂(OSiR₂)_{y}OSiR₂H, or combinations of two or more thereof where each occurrence of R is independently a C1-C18 alkyl, a C1-C18 cycloalkyl, a C1-C18 substituted alkyl, a C1-C18 substituted cycloalkyl, wherein R optionally contains at least one heteroatom, each occurrence of a independently has a value from 0 to 3, f has a value of 1 to 8, k has a value of 1 to 11, each of p, u, v, y and z independently has a value from 0 to 20, w and x are from 0 to 3000, provided that p + x + y equals 1 to 1000 and the valences of the all the elements in the silyl hydride are satisfied, M represents a monofunctional group of formula R'₃SiO_{1/2}, D represents a difunctional group of formula R'₂SiO_{2/2}, T represents a trifunctional group of formula R'SiO_{3/2}, Q represents a tetrafunctional group of formula SiO_{4/2}. an M^{H} represents HR'₂SiO_{1/2} , T^{H} represents HSiO_{3/2}, and D^{H} represents R'HSiO_{2/2}; each occurrence of R' is independently C1-C18 alkyl, a C1-C18 cycloalkyl, C1-C18 substituted alkyl, a C1-C18 substituted cycloalkyl, wherein R' optionally contains at least one heteroatom; x is 1-8, and y is 0-10, wherein the term substituted means containing one or more substituents, chosen from a halo or an ether including -OR⁹ wherein R⁹ is hydrocarbyl.

In one embodiment, the catalyst is present in an amount of from 0.01 mole percent to 10 mole percent based on the molar quantity of the unsaturated compound to be reacted.

In one embodiment, the process is conducted at a temperature of between 0 °C and 300 °C.

In one embodiment, the complex is immobilized on a support, chosen from carbon, silica, alumina, MgCl₂, zirconia, polyethylene, polypropylene, polystyrene, poly(aminostyrene), sulfonated polystyrene, or a combination of two or more thereof.

In one aspect, the present invention provides a process for producing a crosslinked material, comprising reacting a mixture comprising (a) a silyl-hydride containing polymer, (b) a mono-unsaturated olefin or an unsaturated polyolefin, or combinations thereof and (c) a catalyst, optionally in the presence of a solvent, in order to produce the crosslinked material, wherein the catalyst is a complex of the Formula (I): 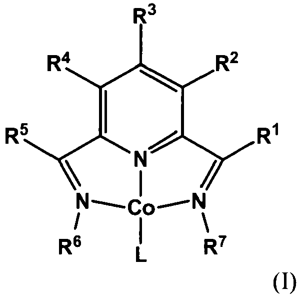
wherein each occurrence of R¹, R², R³, R⁴, and R⁵ is independently hydrogen, a C1-C18 alkyl, a C1-C18 cycloalkyl, a C1-C18 substituted alkyl, a C1-C18 substituted cycloalkyl, an aryl, a substituted aryl, or an inert substituent chosen from a halo or an ether including -OR⁹ wherein R⁹ is hydrocarbyl or substituted hydrocarbyl, wherein R¹-R⁵, other than hydrogen, optionally contain at least one heteroatom, wherein the term substituted means containing one or more substituents, chosen from a halo or an ether including -OR⁹ wherein R⁹ is hydrocarbyl;
each occurrence of R⁶ and R⁷ is independently a C1-C18 alkyl, a C1-C18 cycloalkyl, a C1-C18 substituted alkyl, a C1-C18 substituted cycloalkyl, aryl or substituted aryl, wherein R⁶ and R⁷ optionally contain at least one heteroatom, wherein the term substituted means containing one or more substituents, chosen from a halo or an ether including -OR⁹ wherein R⁹ is hydrocarbyl;
optionally any two of R¹, R², R³, R⁴, R⁵, R⁶, and R⁷ vicinal to one another taken together may form a ring being an unsubstituted, saturated, or unsaturated cyclic structure, and
L is CH₂SiR⁸₃ where each R⁸ is independently a C1-10 alkyl, a C1-10 cycloalkyl, or aryl group optionally containing at least one heteroatom.

In one embodiment, the reaction is conducted under an inert atmosphere.

In one embodiment, the reaction is conducted in the presence of a solvent selected from the group consisting of hydrocarbons, halogenated hydrocarbons, ethers, and combinations thereof.

In one embodiment, the reaction is carried out at a temperature of 0° C. to 300° C.

In one embodiment, the catalyst is present in an amount of from 0.1 mol % to 5 mol %.

The invention relates to cobalt complexes containing pyridine di-imine ligands and their use as efficient dehydrogenative silylation, hydrosilylation, and crosslinking catalysts. There is described herein a complex of the Formulae (I) or (II), wherein Co may be in any valence or oxidation state (e.g., +1, +2, or +3) for use in said dehydrogenative silylation, hydrosilylation, and crosslinking reactions. In particular, according to one embodiment of the invention, a class of cobalt pyridine di-imine complexes has been found that are capable of dehydrogenative silylation and/or hydrosilylation reactions.

By "alkyl" herein is meant to include straight, branched and cyclic alkyl groups. Specific and non-limiting examples of alkyls include, but are not limited to, methyl, ethyl, propyl, isobutyl and cyclohexyl.

By "substituted alkyl" herein is meant an alkyl group that contains one or more substituent groups that are inert under the process conditions to which the compound containing these groups is subjected. The substituent groups also do not substantially or deleteriously interfere with the process.

By "aryl" herein is meant a non-limiting group of any aromatic hydrocarbon from which one hydrogen atom has been removed. An aryl may have one or more aromatic rings, which may be fused, connected by single bonds or other groups. Specific and non-limiting examples of aryls include, but are not limited to, tolyl, xylyl, phenyl and naphthalenyl.

By "substituted aryl" herein is meant an aromatic group substituted as set forth in the above definition of "substituted alkyl." Similar to an aryl, a substituted aryl may have one or more aromatic rings, which may be fused, connected by single bonds or other groups; however, when the substituted aryl has a heteroaromatic ring, the free valence in the substituted aryl group can be to a heteroatom (such as nitrogen) of the heteroaromatic ring instead of a carbon. If not otherwise stated, it is preferred that substituted aryl groups herein contain 1 to about 30 carbon atoms.

By "alkenyl" herein is meant any straight, branched, or cyclic alkenyl group containing one or more carbon-carbon double bonds, where the point of substitution can be either a carbon-carbon double bond or elsewhere in the group. Specific and non-limiting examples of alkenyls include, but are not limited to, vinyl, propenyl, allyl, methallyl, ethylidenyl norbornane.

By "alkynyl" is meant any straight, branched, or cyclic alkynyl group containing one or more carbon-carbon triple bonds, where the point of substitution can be either at a carbon-carbon triple bond or elsewhere in the group.

By "unsaturated" is meant one or more double or triple bonds. In one embodiment, it refers to carbon-carbon double or triple bonds.

By "inert substituent" herein is meant a group other than hydrocarbyl or substituted hydrocarbyl, which is inert under the process conditions to which the compound containing the group is subjected. The inert substituents also do not substantially or deleteriously interfere with any process described herein that the compound in which they are present may take part in. Examples of inert substituents include halo (fluoro, chloro, bromo, and iodo), ether such as -OR⁹ wherein R⁹ is hydrocarbyl or substituted hydrocarbyl.

By "hetero atoms" herein is meant any of the Group 13-17 elements except carbon, and can include for example oxygen, nitrogen, silicon, sulfur, phosphorus, fluorine, chlorine, bromine, and iodine.

By "olefin" herein is meant any aliphatic or aromatic hydrocarbon also containing one or more aliphatic carbon-carbon unsaturations. Such olefins may be linear, branched or cyclic and may be substituted with heteroatoms as described above, with the proviso that the substituents do not interfere substantially or deleteriously with the course of the desired reaction to produce the dehydrogenatively silylated and/or hydrosilylated product. In one embodiment, the unsaturated compound useful as a reactant in the dehydrogenative silylation/hydrosilylation is an organic compound having the structural group, R₂C=C-CHR, where R is an organic fragment or hydrogen.

As indicated above, the present invention is directed to a process for producing a dehydrogenatively silylated and/or hydrosilylated product comprising reacting a mixture comprising (a) an unsaturated compound containing at least one unsaturated functional group, (b) a silyl hydride containing at least one silylhydride functional group, and (c) a catalyst, optionally in the presence of a solvent, in order to produce the dehydrogenative silylated product, and/or hydrosilylated product wherein the catalyst is a complex of the Formula (I); 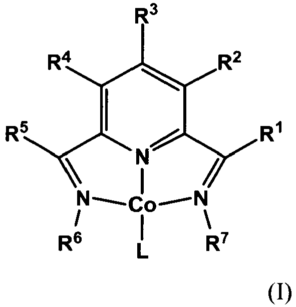 wherein
each occurrence of R¹, R², R³, R⁴, and R⁵ is independently hydrogen, C1-C18 alkyl, C1-C18 substituted alkyl, aryl, substituted aryl, or an inert substituent, wherein R¹-R⁵, other than hydrogen, optionally contain at least one heteroatom;
each occurrence of R⁶ and R⁷ is independently C1-C18 alkyl, C1-C18 substituted alkyl, aryl or substituted aryl, wherein R⁶ and R⁷ optionally contain at least one heteroatom;
optionally any two of R¹, R², R³, R⁴, R⁵, R⁶ and R⁷ vicinal to one another taken together may form a ring being an unsubstituted, saturated, or unsaturated cyclic structure; and L hydroxyl, chloride, bromide, or a C1-C18 alkyl, C1-C18 substituted alkyl, aryl, or substituted aryl group, or component (a) wherein L optionally contains at least one heteroatom.

In one embodiment, L is CH₂SiR⁸₃ where each R⁸ is independently a C1-10 alkyl or aryl group optionally containing at least one heteroatom. In one embodiment, R⁸ is a methyl group (Me).

The catalyst utilized in the process of the present invention is illustrated in Formula (I) above wherein Co is in any valence or oxidation state (e.g., +1, +2, or +3). In one embodiment, at least one of R⁶ and R⁷ is a C1-C10 alkyl. Examples of suitable groups for R⁶ and R⁷ include, but are not limited to, methyl, ethyl, propyl, butyl, or cyclohexyl, etc. Non-limiting examples of suitable compounds include: 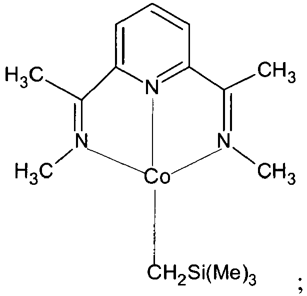 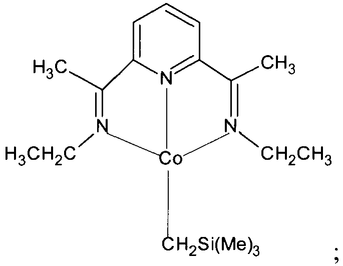 and

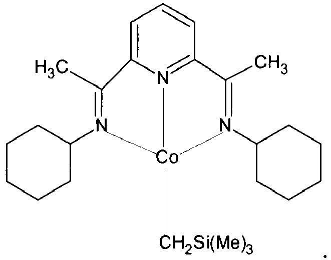

Various methods can be used to prepare the catalyst utilized in the process of the present invention. In one embodiment, the catalyst is generated in-situ by contacting a catalyst precursor with an activator in the presence of a liquid medium containing at least one component selected from the group consisting of a solvent, the silyl hydride, the compound containing at least one unsaturated group, and combinations thereof, wherein the catalyst precursor is represented by structural Formula II 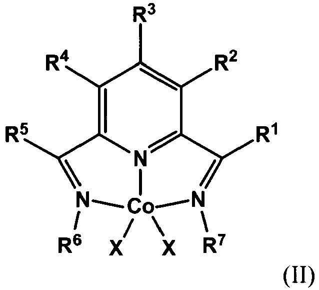 wherein
each occurrence of R¹, R², R³, R⁴, and R⁵ is independently hydrogen, C1-C18 alkyl, C1-C18 substituted alkyl, aryl, substituted aryl, or an inert substituent, wherein R¹-R⁵, other than hydrogen, optionally contain at least one heteroatom;
each occurrence of R⁶ and R⁷ is independently C1-C18 alkyl, C1-C18 substituted alkyl, aryl or substituted aryl, wherein R⁶ and R⁷ optionally contain at least one heteroatom;
optionally any two of R¹, R², R³, R⁴, R⁵, R⁶ and R⁷ vicinal to one another taken together may form a ring being an unsubstituted, saturated, or unsaturated cyclic structure; and
X is an anion selected from the group consisting of F⁻, Cl⁻, Br⁻, I⁻, CF₃R⁴⁰SO₃⁻ or R⁵⁰COO⁻, wherein R⁴⁰ is a covalent bond or a C1-C6 alkylene group, and R⁵⁰ is a C1-C10 hydrocarbyl group.

The activator is an alkali metal alkyl of the formula MCH₂SiR⁸₃, where M is an alkali metal.

The methods to prepare the catalysts are known to a person skilled in the field. For example, the catalysts can be prepared by reacting a PDI ligand with a metal halide, such as CoCl₂ as disclosed in US Patent Application Publication 2011/0009573A1. Typically, the PDI ligands are produced through condensation of an appropriate amine or aniline with 2,6-diacetylpyridine and its derivatives. If desired, the PDI ligands can be further modified by known aromatic substitution chemistry.

In the process of the invention, the catalysts can be unsupported or immobilized on a support material, for example, carbon, silica, alumina, MgCl₂ or zirconia, or on a polymer or prepolymer, for example polyethylene, polypropylene, polystyrene, poly(aminostyrene), or sulfonated polystyrene. The metal complexes can also be supported on dendrimers.

In some embodiments, for the purposes of attaching the metal complexes of the invention to a support, it is desirable that at least one of R¹ to R⁹ of the metal complexes, preferably R⁶, has a functional group that is effective to covalently bond to the support. Exemplary functional groups include but are not limited to SH, COOH, NH₂ or OH groups.

In one embodiment, silica supported catalyst may be prepared via Ring-Opening Metathesis Polymerization (ROMP) technology as discussed in the literature, for example Macromol. Chem. Phys. 2001, 202, No. 5, pages 645-653; Journal of Chromatography A, 1025 (2003) 65-71.

One way to immobilize catalysts on the surface of dendrimers is by the reaction of Si-Cl bonded parent dendrimers and functionalized PDI in the presence of a base is as illustrated by Kim et al. in Journal of Organometallic Chemistry 673 (2003) 77-83.

The unsaturated compound containing at least one unsaturated functional group utilized in the process of the invention can be a compound having one, two, three, or more unsaturations. Examples of such unsaturated compounds include an olefin, a cycloalkene, unsaturated polyethers such as an alkyl-capped allyl polyether, a vinyl-functional alkyl-capped allyl or methallyl polyether, an alkyl-capped terminally unsaturated amine, an alkyne, terminally unsaturated acrylate or methacrylate, unsaturated aryl ether, vinyl-functionalized polymer or oligomer, vinyl-functionalized silane, vinyl-functionalized silicone, unsaturated fatty acids, unsaturated esters, and combinations thereof.

Unsaturated polyethers suitable for the dehydrogenative silylation reaction preferably are polyoxyalkylenes having the general formula:

R¹⁰(OCH₂CH₂)_{z}(OCH₂CHR¹¹)_{w}-OR¹² (Formula III)

or

R¹²O(CHR¹¹CH₂O)_{w}(CH₂CH₂O)_{z}-CR¹³₂-C≡C-CR¹³₂-(OCH₂CH₂)_{z}(OCH₂CHR¹¹)_{w}R¹² (Formula IV)

or

H₂C=CR¹¹CH_{z}O(CH₂CH₂O)_{z}(CH₂CHR¹¹)_{w}CH₂CR¹³=CH₂ (Formula V)

wherein R¹⁰ denotes an unsaturated organic group containing from 2 to 10 carbon atoms such as allyl, methylallyl , propargyl or 3-pentynyl. When the unsaturation is olefinic, it is desirably terminal to facilitate smooth dehydrogenative silylation and/or hydrosilylation. However, when the unsaturation is a triple bond, it may be internal. R¹² is hydrogen, vinyl, or a polyether capping group of from 1 to 8 carbon atoms such as the alkyl groups: CH₃, n-C₄H₉, t-C₄H₉ or i-C₈H₁₇, the acyl groups such as CH₃COO, t-C₄H₉COO, the beta-ketoester group such as CH₃C(O)CH₂C(O)O, or a trialkylsilyl group. R¹¹ and R¹³ are monovalent hydrocarbon groups such as the C1 - C20 alkyl groups, for example, methyl, ethyl, isopropyl, 2-ethylhexyl, dodecyl and stearyl, or the aryl groups, for example, phenyl and naphthyl, or the alkaryl or aralkyl groups, for example, benzyl, phenylethyl and nonylphenyl, or the cycloalkyl groups, for example, cyclohexyl and cyclooctyl. R¹³ may also be hydrogen. Methyl is the most preferred R¹¹ and R¹³ groups. Each occurrence of z is 0 to 100 inclusive and each occurrence of w is 0 to 100 inclusive. Preferred values of z and w are 1 to 50 inclusive.

Specific examples of preferred unsaturated compounds useful in the process of the present invention include N,N-dimethylallyl amine, allyloxy-substituted polyethers, propylene, 1-butene, 1-hexene, styrene,, vinylnorbornane, 5-vinyl-norbornene, long-chain, linear alpha olefins such as 1-octadecene, internal olefins such as cyclopentene, cyclohexene, norbornene, and 3-hexene, branched olefins such as isobutylene and 3-methyl-1-octene, unsaturated polyolefins, e.g., polybutadiene, polyisoprene and EPDM, unsaturated acids or esters such as oleic acid, linoleic acid and methyl oleate, a vinyl siloxane of the Formula VI and combinations thereof, wherein Formula VI is 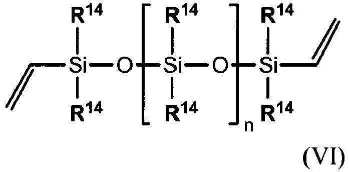 wherein each occurrence of R¹⁴ is independently a C1-C18 alkyl, C1-C18 substituted alkyl, vinyl, aryl, or a substituted aryl, and n is greater than or equal to zero. In one embodiment, n is 0-500, 1-250, 50-150, etc. Here, as elsewhere in the specification and claims, numerical values may be combined to form new and non-disclosed ranges. As defined herein, "internal olefin" means an olefin group not located at a chain or branch terminus, such as 3-hexene.

The silyl hydride employed in the reaction is not particularly limited. It can be any compound selected from the group consisting of RₐSiH₄₋ₐ, (RO)ₐSiH₄₋ₐ, QᵤTᵥTₚ^{H}D_{w}D^{H}ₓM^{H}_{y}M_{z}, and combinations thereof. The silyl hydride can contain linear, branched or cyclic structures, or combinations thereof. As used herein, each occurrence of R is independently C1-C18 alkyl, C1-C 18 substituted alkyl, wherein R optionally contains at least one heteroatom, each occurrence of a independently has a value from 0 to 3, each of p, u, v, y and z independently has a value from 0 to 20, w and x are from 0 to 500, provided that p + x + y equals 1 to 500 and the valences of the all the elements in the silyl hydride are satisfied. Preferably, p, u, v, y, and z are from 0 to 10, w and x are from 0 to 100, wherein p+ x + y equals 1 to 100.

As used herein , an "M" group represents a monofunctional group of formula R'₃ SiO_{1/2}, a "D" group represents a difunctional group of formula R'₂SiO_{2/2}, a "T" group represents a trifunctional group of formula R'SiO_{3/2}, and a "Q" group represents a tetrafunctional group of formula SiO_{4/2}, an "M^{H}" group represents HR'₂SiO_{1/2}, a "T^{H}" represents HSiO_{3/2}, and a "D^{H}" group represents R'HSiO₂ Each occurrence of R' is independently C1-C18 alkyl, C1-C18 substituted alkyl, wherein R' optionally contains at least one heteroatom.

Examples of silyl hydrides containing at least one silylhydride functional group include RₐSiH₄₋ₐ, (RO)ₐSiH₄₋ₐ, HSiRₐ(OR)₃₋ₐ, R₃Si(CH₂)_{f}(SiR₂O)ₖSiR₂H, (RO)₃Si(CH₂)_{f}(SiR₂O)ₖSiR₂H, QᵤTᵥTₚ^{H}D_{w}D^{H}ₓM^{H}_{y}M_{z,}, and combinations thereof, wherein Q is SiO_{4/2}, T is R'SiO_{3/2} T^{H} is HSiO_{3/2} D is R'₂SiO_{2/2}, D^{H} is R'HSiO_{2/2}, M^{H} is HR'₂SiO_{1/2}, M is R'₃SiO_{1/2}, each occurrence of R and R' is independently C1-C18 alkyl, C1-C18 substituted alkyl, aryl, or substituted aryl, wherein R and R' optionally contain at least one heteroatom, each occurrence of a independently has a value from 1 to 3 (with the proviso that the silicon remains tetravalent), f has a value of 1 to 8, k has a value of 1 to 11, g has a value of from 1 to 3, p is from 0 to 20, u is from 0 to 20, v is from 0 to 20, w is from 0 to 1000, x is from 0 to 1000, y is from 0 to 20, and z is from 0 to 20, provided that p+ x + y equals 1 to 3000, and the valences of the all the elements in the silyl hydride are satisfied. In the above formulations, p, u, v, y, and z may also be from 0 to 10, w and x may be from 0 to 100, wherein p + x + y equals 1 to 100.

The instant invention also provides hydrosilylation with hydridosiloxanes comprising carbosiloxane linkages (for example, Si-CH₂-Si-O-SiH, Si-CH₂-CH₂-Si-O-SiH or Si-arylene-Si-O-SiH). Carbosiloxanes contain both the -Si-(hydrocarbylene)-Si- and -Si-O-Si- functionalities, where hydrocarbylene represents a substituted or unsubstituted, divalent alkylene, cycloalkylene or arylene group. The synthesis of carbosiloxanes is disclosed in U.S. Patent No. 7,259,220; U.S. Patent No. 7,326,761 and U.S. Patent No. 7,507,775 all of which are incorporated herein in their entirety by reference. An exemplary formula for hydridosiloxanes with carbosiloxane linkages is R₃Si(CH₂R)ₓSiOSiR₂(OSiR₂)_{y}OSiR₂H, wherein each occurrence of R is independently a monovalent alkyl, cycloalkyl or aryl group. In one embodiment, R is independently C1-C18 alkyl, C1-C18 substituted alkyl, aryl, or substituted aryl. In one embodiment, R is chosen from methyl, ethyl, cyclohexyl or phenyl. Additionally, R in the hydridosiloxane with carbosiloxane linkages, independently may also be H. The subscript x has a value of 1-8, y has a value from zero to 10 and is preferably zero to 4. A specific example of a hydridocarbosiloxane is (CH₃)₃SiCH₂CH₂Si(CH₃)₂OSi(CH₃)₂H.

In one embodiment, the silyl hydride has one of the following structures:

R¹⁵ₐ(R¹⁶O)_{b}SiH (Formula VII)

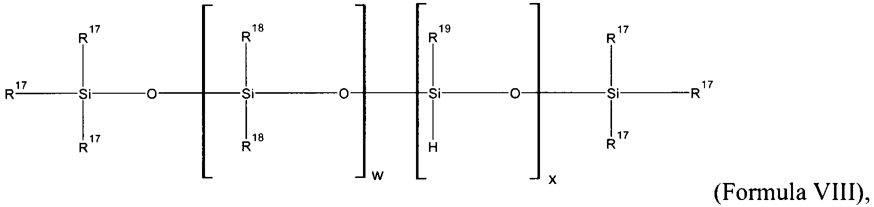

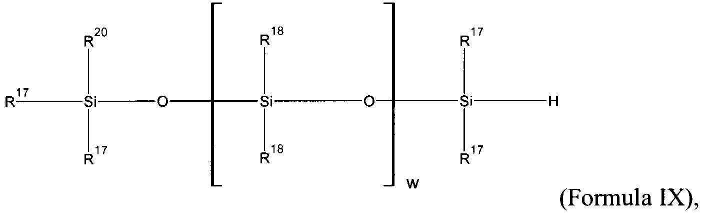

or 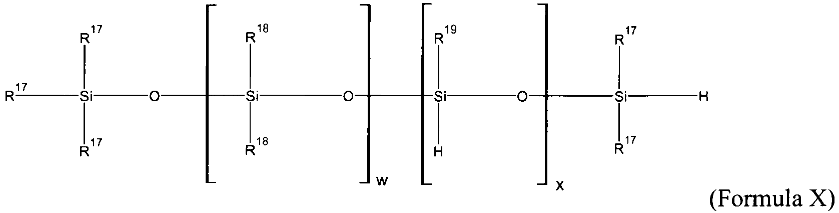 wherein each occurrence of R¹⁵, R¹⁶, R¹⁷, R¹⁸, and R¹⁹ is independently a C1-C18 alkyl, C1-C18 substituted alkyl, aryl, or substituted aryl, R²⁰ is hydrogen, a C1-C18 alkyl, C1-C18 substituted alkyl, aryl, or substituted aryl, x and w are independently greater than or equal to 0 (x is at least equal to 1 for Formula VIII)), and a and b are integers from 0 to 3 provided that a + b = 3.

Effective catalyst usage for dehydrogenative silylation ranges from 0.01 mole percent to 10 mole percent based on the molar quantity of the alkene to be reacted. In one embodiment, the catalyst level is 0.01 mole percent to 10 mole percent, 0.05 mole percent to 7.5 mole percent, 0.1 to 5 mole percent, 0.5 to 2.5 mole percent, even 1 to 2 mole percent. Reaction may be run at temperatures from about 0°C up to 300°C, depending on the thermal stability of the alkene, silyl hydride and the specific pyridine diimine complex. Temperatures in the range, 20 - 100°C, have been found to effective for most reactions. Heating of reaction mixtures can be done using conventional methods as well as with microwave devices.

The dehydrogenative silylation and/or hydrosilylation reactions of this invention can be run at subatmospheric and suprastmospheric pressures. Typically, pressures from about 1 atmosphere (0.1 MPa) to about 200 atmospheres (20 MPa), preferably to about 50 atmospheres (5.0 MPa), are suitable. Higher pressures are effective with volatile and/or less reactive alkenes which require confinement to enable high conversions.

A variety of reactors can be used in the process of this invention. Selection is determined by factors such as the volatility of the reagents and products. Continuously stirred batch reactors are conveniently used when the reagents are liquid at ambient and reaction temperature. These reactors can also be operated with a continuous input of reagents and continuous withdrawal of dehydrogenatively silylated reaction product.

With gaseous or volatile olefins and silanes, fluidized-bed reactors, fixed-bed reactors and autoclave reactors can be more appropriate. Alternatively, the cobalt pyridinediimine catalyst can be placed in an autoclave reactor, or supported in a catalyst basket therein, and the reagents charged and maintained at the selected temperature and pressure to effect the dehydrogenative silylation and/or hydrosilylation.

The catalysts used in the invention are useful for catalyzing dehydrogenative silylation and/or hydrosilylation reactions. An example is shown in the reaction scheme below.

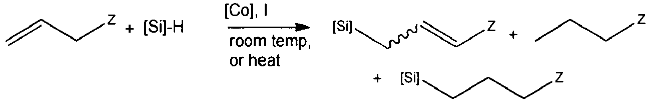

The reactions are typically facile at ambient temperatures and pressures, but can also be run at lower or higher temperatures (0 to 300°C) or pressures (ambient to 205 atmospheres, (0.1 - 20.5 MPa)). A range of unsaturated compounds can be used in this reaction, such as N,N-dimethylallyl amine, allyloxy-substituted polyethers, cyclohexene, and linear alpha olefins (i.e., 1-butene, 1-octene, 1-dodecene, etc.).

Because the double bond of an alkene is preserved during the dehydrogenative silylation reaction employing these cobalt catalysts, a singly-unsaturated olefin may be used to crosslink silyl-hydride containing polymers. Alternatively, an unsaturated siloxane polymer may be used in a hydrosilylation reaction to produce a cross-linked product. A variety of new materials can be produced by this method by varying the hydride polymer and length of the olefin used for the crosslinking. Accordingly, the catalysts used in the process of the invention have utility in the preparation of useful silicone products, including, but not limited to, coatings, for example release coatings, room temperature vulcanizates, sealants, adhesives, products for agricultural and personal care applications, and silicone surfactants for stabilizing polyurethane foams.

Furthermore, the dehydrogenative silylation and/or hydrosilylation may be carried out on any of a number of unsaturated polyolefins, such as polybutadiene, polyisoprene or EPDM-type copolymers, to either functionalize these commercially important polymers with silyl groups or crosslink them via the use of hydrosiloxanes containing multiple SiH groups at lower temperatures than conventionally used. This offers the potential to extend the application of these already valuable materials in newer commercially useful areas.

In one embodiment, the catalysts are useful for dehydrogenative silylation and/or hydrosilylation of a composition containing a silyl hydride and a compound having at least one unsaturated group. The process includes contacting the composition with a metal complex of the catalyst, either supported or unsupported, to cause the silyl hydride to react with the compound having at least one unsaturated group to produce a dehydrogenative silylation and/or hydrosilylation product, which may contain the metal complex catalyst. The dehydrogenative silylation and/or hydrosilylation reaction can be conducted optionally in the presence of a solvent. If desired, when the dehydrogenative silylation and/or hydrosilylation reaction is completed, the metal complex can be removed from the reaction product by magnetic separation and/or filtration. These reactions may be performed neat, or diluted in an appropriate solvent. Typical solvents include benzene, toluene, diethyl ether, etc. It is preferred that the reaction is performed under an inert atmosphere. The catalyst can be generated in-situ by reduction using an appropriate reducing agent.

The manner or order in which the respective components for carrying out the process are added to one another is not particularly limited and can be chosen as desired. In one embodiment, the silylhydride can be added to a mixture containing the metal complex and the unsaturated olefin. In another embodiment, the unsaturated olefin can be added to a mixture containing the metal complex and the silylhydride. In still another embodiment, a mixture of silylhydride and unsaturated olefin can be added to a mixture of metal complex, silylhydride and unsaturated olefin. It will be appreciated that the first mixtures in the above embodiments may be heated or preliminarily reacted prior to addition of the remaining components.

The catalyst complexes of the invention are efficient and selective in catalyzing dehydrogenative silylation and/or hydrosilylation reactions. For example, when the catalyst complexes of the invention are employed in the dehydrogenative silylation and/or hydrosilylation of an alkyl-capped allyl polyether or a compound containing an unsaturated group, the reaction products are essentially free of unreacted alkyl-capped allyl polyether and its isomerization products. In one embodiment, the reaction products do not contain the unreacted alkyl-capped allyl polyether and its isomerization products. Further, when the compound containing an unsaturated group is an unsaturated amine compound, the dehydrogenatively silylated and/or hydrosilylated product is essentially free of internal addition products and isomerization products of the unsaturated amine compound. As used herein, "essentially free" is meant no more than 10 wt%, preferably 5 wt% based on the total weight of the hydrosilylation product. "Essentially free of internal addition products" is meant that silicon is added to the terminal carbon.

The following examples are intended to illustrate, but in no way limit the scope of the present invention. All parts and percentages are by weight and all temperatures are in degrees Celsius unless explicitly stated otherwise. All the publications and the US patents referred to in the application are hereby incorporated by reference in their entireties.

### EXAMPLES

### General Considerations

All air- and moisture-sensitive manipulations were carried out using standard vacuum line, Schlenk (Argon), and cannula techniques or in an MBraun inert atmosphere dry box containing an atmosphere of purified nitrogen. Solvents for air- and moisture-sensitive manipulations were initially dried and deoxygenated using literature procedures described in Pangborn, A. B.; Giardello, M. A.; Grubbs, R. H.; Rosen, R. K.; Timmers, F. J. Organometallics 1996, 15, 1518. SilForce® SL6100 (M^{vi}D₁₂₀M^{vi}), SilForce® SL6020 (MD₁₅D^{H}₃₀M) were acquired from Momentive Performance Materials and dried under high vacuum for 12 hours before use.

All silanes and alkene substrates are dried over CaH₂ or LiAlH₄, then distilled under vacuum and stored under N₂. ¹H NMR spectra were recorded on Bruker AVANCE 300, Varian Inova 400 and Bruker AVANCE 500 spectrometers operating at 300.13, 399.78, and 500.62 MHz, respectively. ¹³C NMR spectra were either recorded on a Bruker 500 spectrometer operating at 125.853 MHz. All ¹H and ¹³C NMR chemical shifts are reported relative to SiMe₄ using the ¹H (residual) and ¹³C chemical shifts of the solvent as a secondary standard. GC analyses were performed using a Shimadzu GC-2010 gas chromatograph equipped with a Shimadzu AOC-20s autosampler and a Shimadzu SHRXI-5MS capillary column (15m x 250µm). The instrument was set to an injection volume of 1 µL, an inlet split ratio of 20:1, and inlet and detector temperatures of 250°C and 275°C, respectively. UHP-grade helium was used as carrier gas with a flow rate of 1.82 mL/min. The temperature program used for all the analyses is as follows: 60 °C, 1 min; 15 °C/min to 250 °C, 2 min.

Catalyst loadings in the following text are reported in mol% of the cobalt complex (mol_{Co complex} / mol_{olefin} x 100).

### Attempted synthesis of ^{Me}APDICoMe

This procedure is based upon that used for the synthesis of ^{Me}APDICoNs (*vide supra*) In a nitrogen-filled drybox, a scintillation vial was charged with 0.078 g (0.244 mmol) of ^{Me}APDICoCl₂ and approximately 8 mL of THF. The suspension was chilled at -35 °C for 20 minutes. To this suspension was then added dropwise a diethyl ether solution of methyllithium (1.60 M in diethyl ether, 0.306 mL), during which time a solution color change to black with concomitant formation of dark precipitate was observed. The reaction mixture was stirred at room temperature for 3 hours, after which the volatiles were removed in vacuo. The residue contained a complex mixture of unidentified cobalt-containing products. Notably no evidence for the formation of the expected ^{Me}APDICoMe was found.

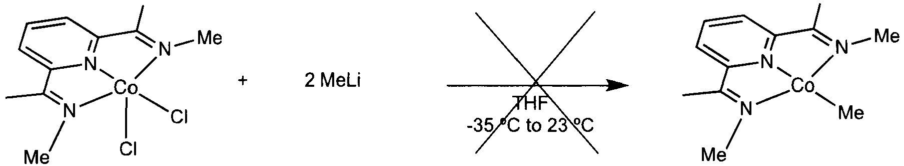

### Example 1. Synthesis of ^{Me}APDICoNs

In a nitrogen-filled drybox, a scintillation vial was charged with 0.350 g (1.097 mmol) of ^{Me}APDICoCl₂ and approximately 14 mL of THF. The suspension was chilled at -35 °C for 20 minutes. To this suspension was then added dropwise a THF solution of (trimethylsilyl)methyllithium (0.207 g in 3 mL THF), during which time a solution color change to purple was observed. The reaction mixture was stirred at room temperature overnight, after which the volatiles were removed in vacuo. The residue was extracted with diethyl ether, filtered through Celite, and concentrated. Layering the supernatant with pentane and recrystallization at -35 °C yielded 0.155 g (42%) of a purple solid identified as ^{Me}APDICoNs. ¹H NMR (benzene-*d₆*, 23 °C): *δ* = 9.83 (t, 8 Hz, 1H), 7.21 (d, 8 Hz, 2H), 3.98 (s, 6H), 1.22 (s, 2H), -0.11 (s, 9H), -0.57 (s, 6H). ¹³C NMR (benzene-*d*₆,23 °C): *δ* = 165.29, 152.49, 122.43, 114.04, 48.25, 30.25, 20.95, 3.39.

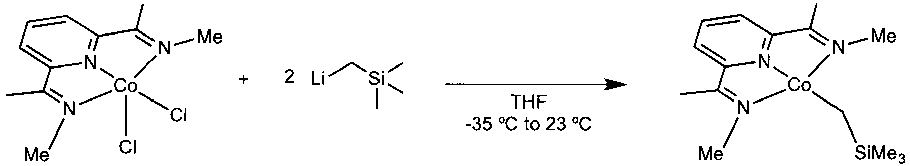

### Example 2. Synthesis of ^{Et}APDICoNs

In a nitrogen-filled drybox, a scintillation vial was charged with 0.134 g (0.386 mmol) of ^{Et}APDICoCl₂ and approximately 10 mL of THF. The suspension was chilled at -35 °C for 20 minutes. To this suspension was then added dropwise a THF solution of (trimethylsilyl)methyllithium (0.073 g in 1 mL THF), during which time a solution color change to purple was observed. The reaction mixture was stirred at room temperature overnight, after which the volatiles were removed in vacuo. The residue was extracted with toluene, filtered through Celite, and concentrated. Layering the supernatant with pentane and recrystallization at -35 °C yielded 0.093 g (66.3%) of a purple solid identified as ^{Et}APDICoNs. ¹H NMR (benzene-*d*₆, 23 °C): *δ* = 9.80 (t, 8 Hz, 1H), 7.28 (d, 8 Hz, 2H), 5.21 (q, 7 Hz, 4H), 1.70 (t, 7 Hz, 6H), 1.17 (s, 2H), -0.13 (s, 9H), -0.37 (s, 6H). ¹³C NMR (benzene-*d₆*, 23 °C): *δ* = 162.77, 152.73, 122.55, 114.03, 53.59, 20.29, 12.52, 3.31, 0.05.

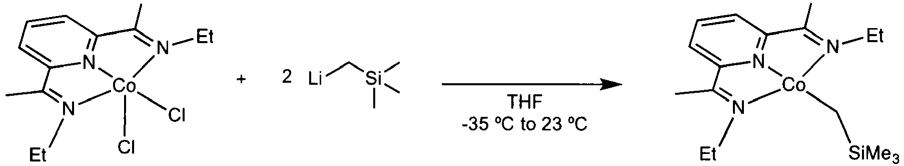

### Example 3. Synthesis of ^{Cy}APDICoNs

In a nitrogen-filled drybox, a scintillation vial was charged with 0.280 g (0.667 mmol) of ^{Cy}APDICoCl (Bowman, A. C.; Milsmann, C.; Bill, E.; Lobkovsky, E.; Weyhermüller, T.; Wieghardt, K.; Chirik, P. J. Inorg. Chem. 2010, 49, 6110-6123) and approximately 14 mL of diethyl ether. The suspension was chilled at -35 °C for 20 minutes. To this suspension was then added dropwise a diethyl ether solution of (trimethylsilyl)methyllithium (0.066 g in 3 mL diethylether), during which time a solution color change from orange to purple was observed. The reaction mixture was stirred at room temperature for 1 hour, after which time the mixture was filtered through Celite, and concentrated. Layering the supernatant with pentane and recrystallization at -35 °C yielded 0.250 g (79%) of a purple solid identified as ^{Cy}APDICoNs. ¹H NMR (benzene-*d*₆, 23 °C)*: δ* = 9.68 (t, 8 Hz, 1H), 7.43 (d, 8 Hz, 2H), 6.93 (br, 2H), 4.27 (m, 2H), 3.15-1.18 (m, 20H), -0.01 (s, 6H), -0.45 (s, 9H). ¹³C NMR (benzene-*d*₆, 23 °C): *δ* = 158.84, 144.50, 128.13, 109.13, 70.56, 26.23, 25.99, 21.49, 2.18.

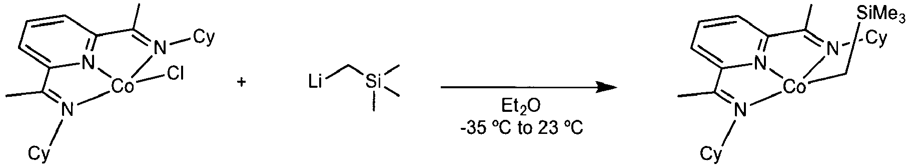

### Examples 4-6. General procedure for the silylation of 1-octene with different silanes using ^{Cy}APDICoNs.

In a nitrogen-filled drybox, a scintillation vial was charged with 0.100 g (0.891 mmol) of 1-octene and 0.002 g (0.004 mmol) ^{Cy}APDICoNs (0.5 mol %), 0.891 mmol of silane (0.146 g (EtO)₃SiH, 0.198 g of MD^{H}M or 0.104 g of Et₃SiH) was then added to the mixture and the reaction was stirred at room temperature for desired amount of time. The product mixture was quenched by exposure to air. The product mixture was filtered through a plug of silica gel (Fluka® high-purity grade, pore size 60 , 230-400 mesh particle size, 40-63 µm particle size, for flash chromatography) and eluted with hexane. The crude product mixture was analyzed by GC. Volatiles were then removed from the crude mixture product and the resulting mixture was analyzed by ¹H and ¹³C NMR spectroscopy.

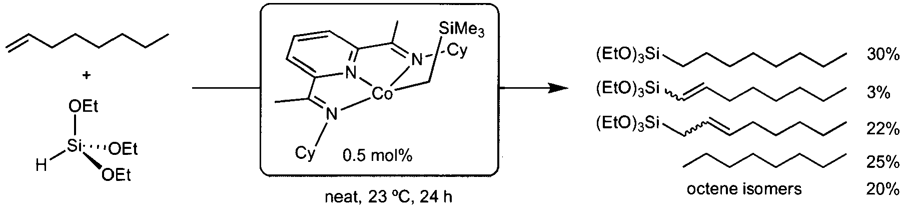

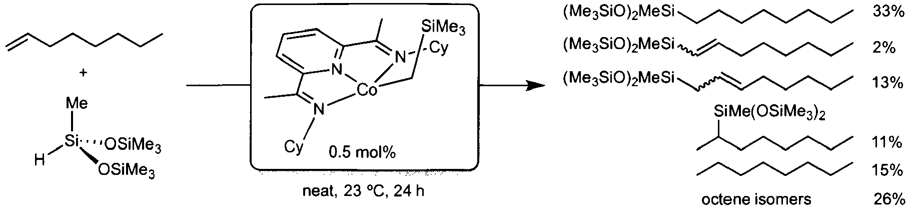

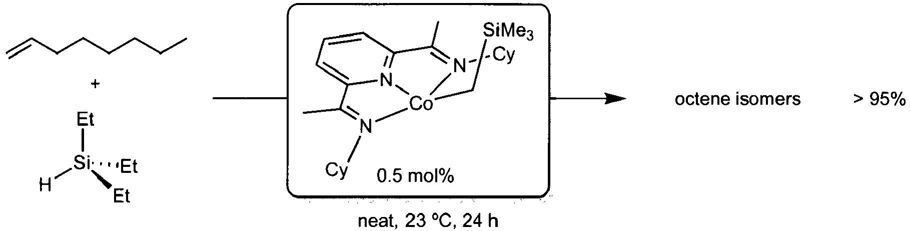

### Examples 7-9. General procedure for the silylation of 1-octene with different silanes using ^{Et}APDICoNs.

In a nitrogen-filled drybox, a scintillation vial was charged with 0.100 g (0.891 mmol) of 1-octene and 0.002 g (0.004 mmol) ^{Et}APDICoNs (0.5 mol %), 0.891 mmol of silane (0.146 g (EtO)₃SiH, 0.198 g of MD^{H}M or 0.104 g of Et₃SiH) was then added to the mixture and the reaction was stirred at room temperature for desired amount of time. The product mixture was quenched by exposure to air. The product mixture was filtered through silica gel and eluted with hexane. The product mixture was directly injected to GC. The resulting solution was dried under vacuum and the remaining residue was analyzed by ¹H and ¹³C NMR spectroscopy. The yields are based on conversion of 1-octene.

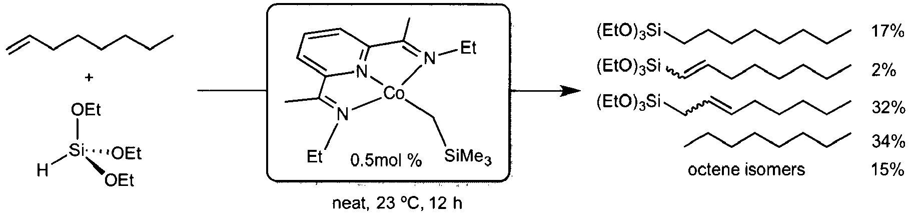

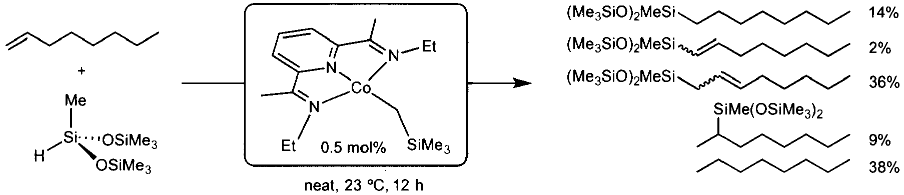

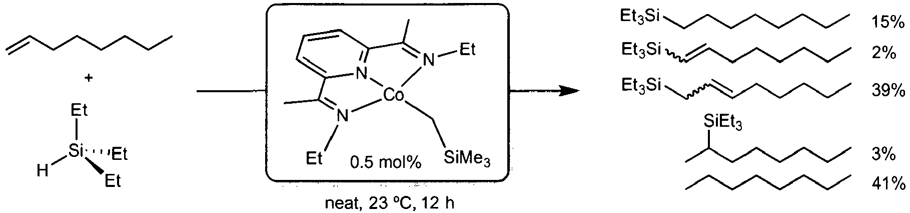

### Examples 10-12. General procedure for the silylation of 1-octene with different silanes using ^{Me}APDICoNs.

In a nitrogen-filled drybox, a scintillation vial was charged with 0.100 g (0.891 mmol) of 1-octene and approximately 0.001 g (0.004 mmol) ^{Me}APDICoNs (0.5 mol %), 0.891 mmol of silane (0.146 g (EtO)₃SiH, 0.198 g of MD^{H}M or 0.104 g of Et₃SiH) was then added to the mixture and the reaction was stirred at room temperature for desired amount of time. The product mixture was quenched by exposure to air. The product mixture was filtered through silica gel and eluted with hexane. The product mixture was directly injected to GC. The resulting solution was dried under vacuum and the remaining residue was analyzed by ¹H and ¹³C NMR spectroscopy. The yields are based on conversion of 1-octene.

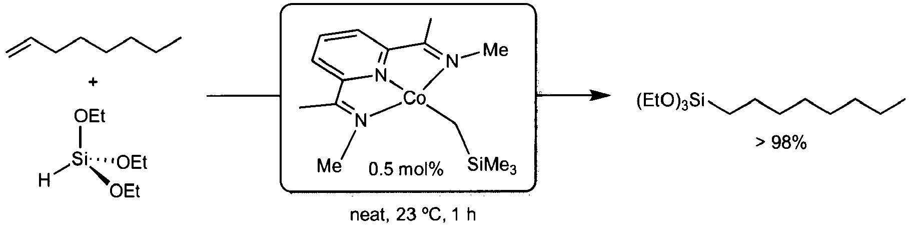

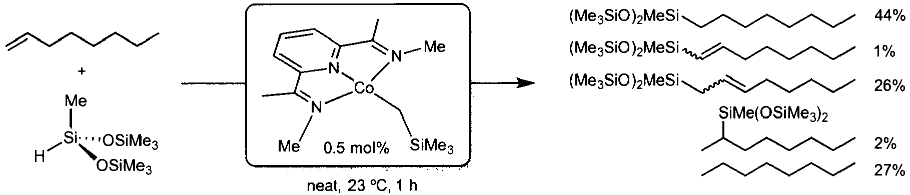

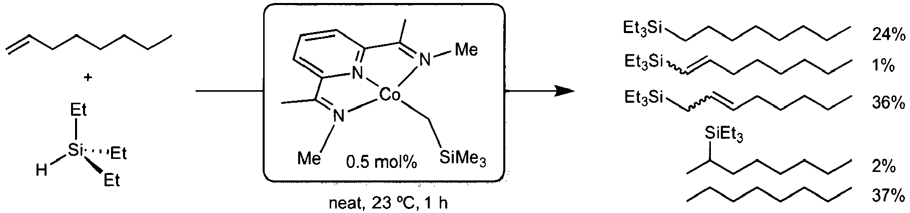

### Example 13. Silylation of 1-octene with 1-(2-trimethylsilylethyl)-1,1,3,3-tetramethyldisiloxane using ^{Me}APDICoNs

In a nitrogen-filled drybox, a scintillation vial was charged with 0.100 g (0.891 mmol) of 1-octene and approximately 0.001 g (0.004 mmol) ^{Me}APDICoNs (0.5 mol %). 1-(2-trimethylsilylethyl)-1,1,3,3-tetramethyldisiloxane (0.209 g, 0.891 mmol) was then added to the mixture and the reaction was stirred at room temperature for 1 hour, after which the mixture was quenched by exposure to air. The product mixture was filtered through silica gel and eluted with hexane. The crude product mixture was analyzed by GC. Volatiles were then removed from the crude mixture product and the resulting mixture was analyzed by ¹H and ¹³C NMR spectroscopy.

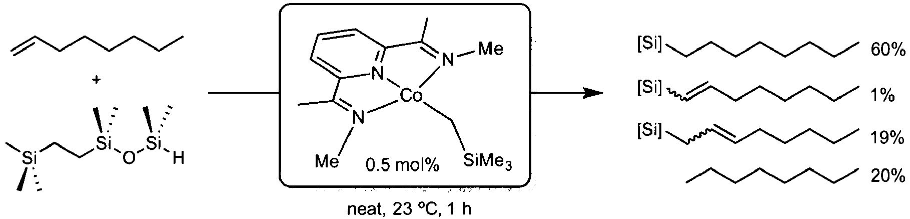

### Example 14. Silylation of 1-octene with 2-(trimethylsilyl)ethyldimethylsilane using ^{Me}APDICoNs

In a nitrogen-filled drybox, a scintillation vial was charged with 0.100 g (0.891 mmol) of 1-octene and approximately 0.001 g (0.004 mmol) ^{Me}APDICoNs (0.5 mol %). 2-(trimethylsilyl)ethyldimethylsilane (0.143 g, 0.891 mmol) was then added to the mixture and the reaction was stirred at room temperature for 1 hour, after which the mixture was quenched by exposure to air. The product mixture was filtered through silica gel and eluted with hexane. The crude product mixture was analyzed by GC. Volatiles were then removed from the crude product mixture and the residue was analyzed by ¹H and ¹³C NMR spectroscopy.

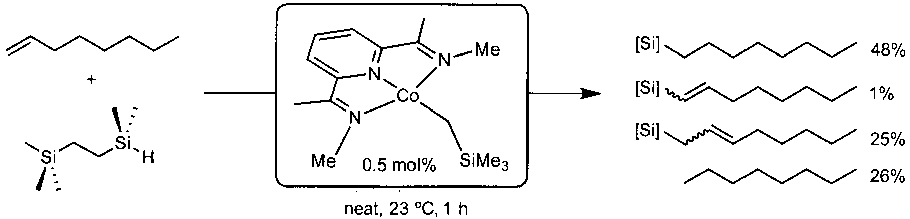

### Example 15. Catalytic hydrosilylation of 1-octene with (EtO)₃SiH at low ^{Me}APDICoNs loading

In a nitrogen-filled drybox, a scintillation vial was charged with 0.400 g (3.56 mmol) of 1-octene and 100 µL of a 16 mM toluene solution of ^{Me}APDICoNs. Then to the mixture was added 0.586 g of (EtO)₃SiH dropwise over a period of 20 seconds and the resulting reaction mixture was stirred at room temperature for 80 minutes. The product mixture was quenched by exposure to air. The product mixture was filtered through silica gel and eluted with hexane. The product mixture was analyzed by GC.

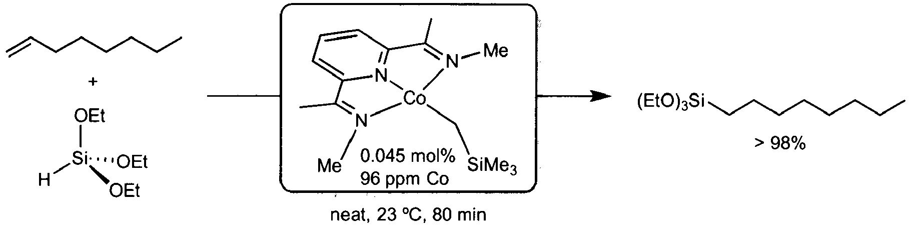

### Example 16. Catalytic hydrosilylation of 1-octene with (EtO)₃SiH at elevated temperature using ^{Me}APDICoNs

In a nitrogen-filled drybox, a scintillation vial was charged with 0.400 g (3.56 mmol) of 1-octene and 200 µL of a 4 mM toluene solution of ^{Me}APDICoNs. Then to the mixture was added 0.586 g of (EtO)₃SiH dropwise over a period of 20 seconds and the resulting reaction mixture was stirred at 60 °C for 3 hours. The product mixture was quenched by exposure to air. The product mixture was filtered through silica gel and eluted with hexane. The product mixture was analyzed by GC.

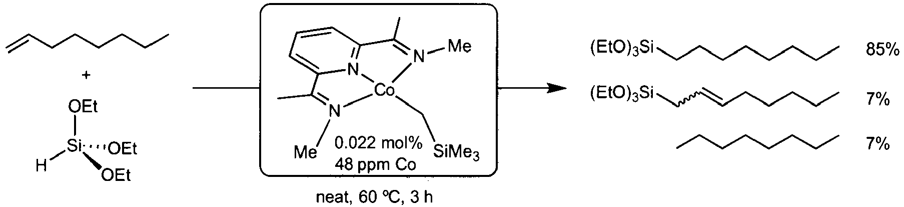

### Example 17. Cross-linking using Momentive SL6100 and SL6020 D1 using ^{Me}APDICoNs

In a nitrogen-filled drybox, a scintillation vial was charged with 3.000 g of mixture of M^{vi}D₁₂₀M^{vi} (SL6100) and MD₁₅D^{H}₃₀M (SL6020) (in 1:2 molar ratio). Then to the mixture was added 20 µL of a 4 mM toluene solution of ^{Me}APDICoNs (10 ppm Co). The reaction mixture was then stirred at room temperature. Complete gelation was achieved in 1 hour. When the reaction was performed at 80 °C, complete gelation occurred within 1 minute.

### Example 18. Silylation of 1-octene with Momentive SL6020 D1 using ^{Me}APDICoNs

In a nitrogen-filled drybox, a scintillation vial was charged with 0.100 g (0.891 mmol) of 1-octene, 0.500 g benzene and approximately 0.001 g (0.004 mmol) ^{Me}APDICoNs, MD₁₅D^{H}₃₀M (0.091 g) was then added and the reaction mixture was stirred at room temperature for 1 hour. The product mixture was quenched by exposure to air. The product mixture was filtered through silica gel and eluted with hexane. The product mixture was analyzed by ¹H NMR spectroscopy. The ¹H NMR (benzene-*d*₆) spectrum of the product mixture revealed vinyl proton signals at 5.5-6.0 ppm, characteristic of dehydrogenative silylation.

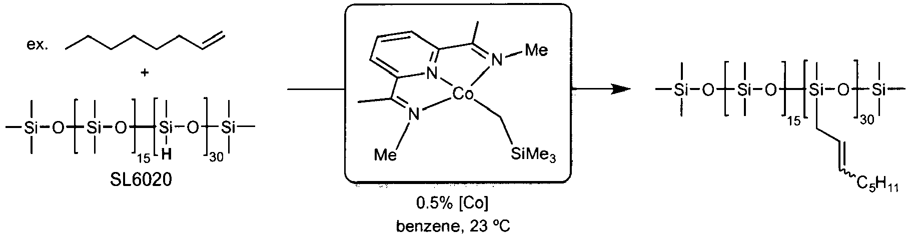

### Example 19. Silylation of Momentive SL6100 with (EtO)₃SiH using ^{Me}APDICoNs

In a nitrogen-filled drybox, a scintillation vial was charged with 1.000 g of M^{vi}D₁₂₀M^{vi} (SL6100), 0.500 g benzene and approximately 0.001 g (0.004 mmol) ^{Me}APDICoNs, MD^{H}M (0.200 g, 0.891 mmol) was then added and the reaction mixture was stirred at room temperature for 1 hour. The product mixture was quenched by exposure to air. The product mixture was filtered through silica gel and eluted with hexane. The product mixture was analyzed by ¹H NMR spectroscopy. The ¹H NMR (benzene-*d*₆) spectrum of the product mixture contained no vinyl proton signals, signaling hydrosilylation products. The products were identified as a mixture of anti-Markovnikov and Markovnikov hydrosilylation by their characteristic proton signals (a multiplet at 0.75 ppm for Anti-Markovnikov product; a doublet at 1.3 ppm for Markovnikov product)

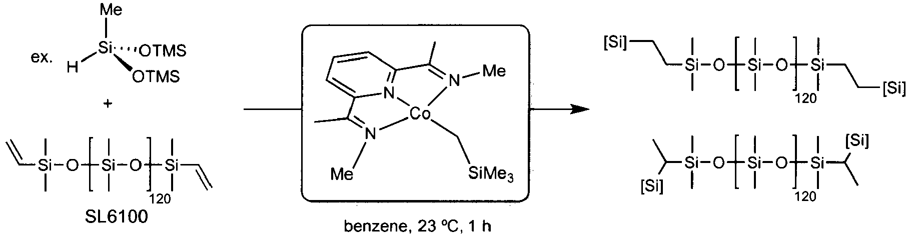

### Example 20. Silylation of allyl(poly)ether (Y10227) with (EtO)₃SiH using ^{Me}APDICoNs

In a nitrogen-filled drybox, a scintillation vial was charged with 0.279 g of Y10227 (6.88% vinyl content) and approximately 0.001 g of ^{Me}APDICoNs (0.004 mmol, 1 mol %), (EtO)₃SiH (0.075 g, 0.457 mmol) was then added and the reaction mixture was stirred at 50 °C for 1 hour. The product mixture was quenched by exposure to air. The product mixture was filtered through silica gel and eluted with hexane. The product mixture was analyzed by ¹H NMR spectroscopy. The ¹H NMR (benzene-*d*₆) spectrum contained no olefinic peaks, and characteristic alpha-Si methylene CH₂ signals were observed at 0.71 ppm indicating formation of Anti-Markovnikov hydrosilylation product.

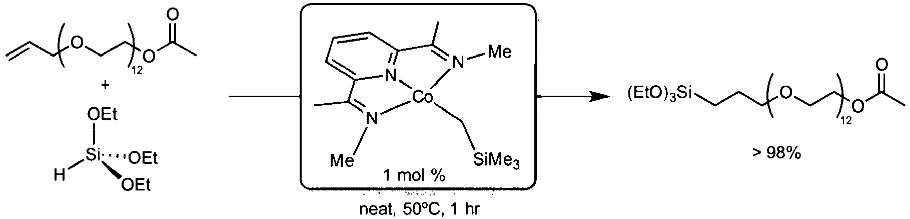

### Examples 21-34. General procedure for the silylation of vinylsilane with different silanes using ^{Me}APDICoNS, ^{Et}APDICoNs or ^{Cy}APDICoNs

In a nitrogen-filled drybox, a scintillation vial was charged with 0.089 g (0.891 mmol) of trimethyl(vinyl)silane and 0.004 mmol (0.5 mol %) of cobalt catalyst (0.002 g of ^{Cy}APDICoNs, 0.002 g of ^{Et}APDICoNs or 0.001 g of ^{Me}APDICoNs), 0.891 mmol of silane (0.146 g of (EtO)₃SiH or 0.198 g of MD^{H}M) was then added to the mixture and the reaction was stirred at room temperature for desired amount of time. The product mixture was quenched by exposure to air. The product mixture was filtered through silica gel and eluted with hexane. The resulting solution was dried under vacuum and the remaining residue was analyzed by ¹H and ¹³C NMR spectroscopy.

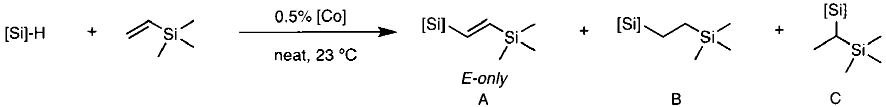

| [Co] | [Si]-H | A | B | C |
|---|---|---|---|---|
| ^{Me}APDICoNs | (EtO)₃SiH | 0 | 57 | 43 |
| | MD^{H}M | 0 | 76 | 24 |
| | | | | |
| ^{Et}APDICoNs | (EtO)₃SiH | 0 | 33 | 67 |
| | MD^{H}M | 1 | 60 | 39 |
| | | | | |
| ^{Cy}APDICoNs | (EtO)₃SiH | 0 | 3 | 97 |
| | MD^{H}M | 8 | 84 | 8 |

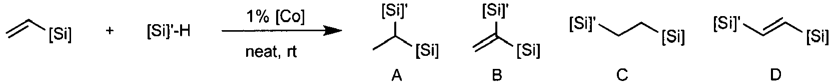

| [Co] | t (95% conv.) | [Si] | [Si]'-H | A | B | C | D |
|---|---|---|---|---|---|---|---|
| ^{Me}APDICoNs | 1 h | SiMe(OSiMe₃)₂ | (EtO)₃SiH | 38.5 | - | 61.5 | - |
| | 1 h | SiMe(OSiMe₃)₂ | MD^{H}M | 23 | - | 77 | - |
| | 1 h | Si(OEt)₃ | (EtO)₃SiH | 8.5 | - | 91.5 | - |
| | 1 h | Si(OEt)₃ | MD^{H}M | 40 | - | 60 | - |
| | | | | | | | |
| ^{Cy}APDICoNs | 1 h | SiMe(OSiMe₃)₂ | (EtO)₃SiH | 72 | - | 27 | 1 |
| | 12 h | SiMe(OSiMe₃)₂ | MD^{H}M | 2.5 | 16 | 30 | 51.5 |
| | 1 h | Si(OEt)₃ | (EtO)₃SiH | - | 43 | - | 57 |
| | 12 h | Si(OEt)₃ | MD^{H}M | 14 | - | 85 | 1 |

### Representative example (21) of hydrosilylation of trimethyl(vinyl)silane with (EtO)₃SiH using ^{Me}APDICoNs

According to the general procedure described above, the product is a mixture of triethoxy(2-(trimethylsilyl)ethyl)silane and triethoxy(1-(trimethylsilyl)ethyl)silane in 57:43 ratio.

Characterization for triethoxy(2-(trimethylsilyl)ethyl)silane: ¹H NMR (benzene-*d*₆, 23 °C): *δ* = 3.81 (q, 7 Hz, 6H), 1.17 (t, 7 Hz, 9H), 0.76-0.64 (m, 4H), -0.02 (s, 9H); ¹³C NMR (benzene-*d*₆, 23 °C): *δ* = 58.56, 18.64, 8.28, 3.39, -2.15

Characterization for triethoxy(1-(trimethylsilyl)ethyl)silane: ¹H NMR (benzene-*d*₆, 23 °C): *δ* = 3.77 (q, 7 Hz, 6H), 1.15 (t, 7 Hz, 9H), 0.20 (s, 9H), 0.06 (q, 7 Hz, 1H); ¹³C NMR (benzene-*d*₆, 23 °C)*: δ* = 58.57, 18.69, 8.75, 3.82, -1.10

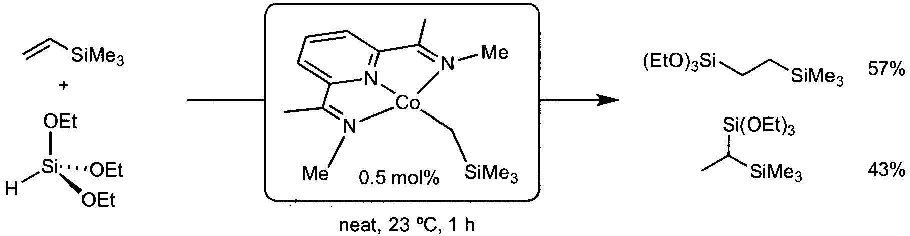

### Representative example (26) of hydrosilylation of trimethyl(vinyl)silane with MD^{H}M using ^{Cy}APDICoNs

According to the general procedure described above, the product is a mixture of 1,1,1,3,5,5,5-heptamethyl-3-(2-(trimethylsilyl)ethyl)trisiloxane, (*E*)-l,1,1,3,5,5,5-heptamethyl-3-(2-(trimethylsilyl)vinyl)trisiloxane and 1,1,1,3,5,5,5-heptamethyl-3-(1-(trimethylsilyl)ethyl)trisiloxane in 84:8:8 ratio.

Characterization of 1,1,1,3,5,5,5-heptamethyl-3-(2-(trimethylsilyl)ethyl)trisiloxane: ¹H NMR (benzene-*d*₆, 23 °C): *δ* = 0.56-0.42 (m, 4H), 0.30-0.10 (m, br, 30H); ¹³C NMR (benzene-*d*₆, 23 °C): *δ* = 10.11, 8.42, 2.14, -0.76, -2.00.

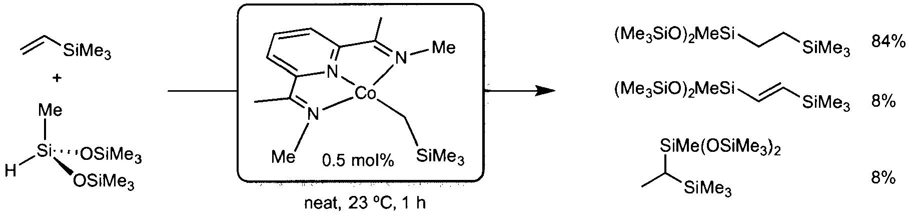

### Example 35. General procedure for Co-catalyzed hydrosilation of alkynes

To a scintillation vial equipped with stir bar under nitrogen was added ^{Me}APDICoNs (0.003 g) followed by triethoxysilane (0.149 g) and 1-octyne (100 mg, 1.00 equiv.). The vial was sealed with a cap and heated to 80 °C in an oil bath for 3 hours. After cooling to ambient temperature, the resulting dark reaction mixture was exposed to air to destroy remaining catalyst. The volatiles were removed with a stream of air and the resulting residue was diluted with a solution of 5% ethyl ether in pentane and passed through a small column of silica gel, eluting with additional 5% ether in pentane solution (5 mL). The resulting clear, colorless eluent was concentrated to give the product mixture as a clear, colorless oil (237 mg, 95%). Analysis of the product by both ¹H and ¹³C NMR established the product ratio shown below. All spectra are in accordance with the literature values (Bo, G. D.; Berthon-Gelloz, G.; Tinant, B.; Marko, 1. E. Organometallics 2006, 25, 1881.)

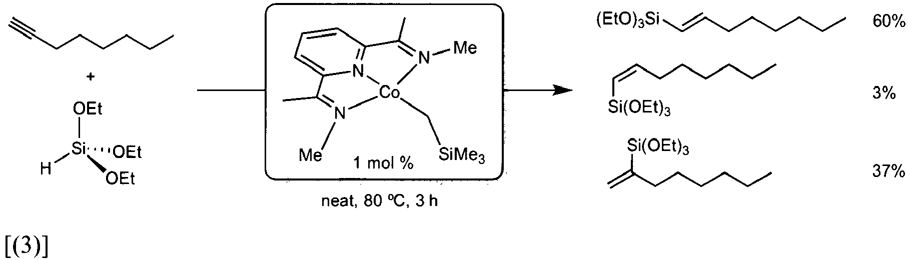

### Example 36A-36C: Silylation of propylene with different silanes using (^{Mes}PDI)CoCH3.

This reaction was carried out in a manner similar to the silylation of 1-butene using 0.11 mmol of silane (0.025 g of MD^{H}M, 0.018 g of (EtO)₃SiH or 0.015 g of (OEt)₂CH₃SiH) 0.001 g (0.002 mmol) of (^{Mes}PDI)CoCH₃ and 5.6 mmol (50 equiv) of propylene. The non-volatiles were analyzed by NMR spectroscopy.

**Table 12. Product Distribution for the Silylation of Propylene.**

| **Silane** | **[Si]-allyl** | **[Si]-propyl** | **Disproportionation Product** |
|---|---|---|---|
| Ex 36A: MD^{H}M | 82% | 18% | None |
| Ex 36B: TES | 40% | 20% | 40% |
| Ex 36C: Me(OEt)₂SiH | 60% | 30% | 10% |

### Characterization of Products of Example 36A:

**3-bis(trimethylsiloxy)methylsilyl-1-propene.** ¹H NMR (CDC13): δ = 0.03 (s, 3H, (OTMS)₂SiC*H*₃), 0.09 (s, 18H, OSi(C*H*₃)₃), 1.49 (d, *J* = 8.1 Hz, 2H, SiC*H₂*CH=CH), 4.86 (d, *J* = 6.3 Hz, 1H, CH₂CH=C(H)*H*), 4.88 (d, *J* = 15 Hz, 1H, CH₂CH=C(*H*)H), 5.77 (m, 1H, CH₂C*H*=CH₂). ¹³C {¹H} NMR (CDCl₃): δ = -0.77 ((OTMS)₂Si*C*H₃), 1.97 (OSi(*C*H₃)₃), 25.82 (SiCH₂CH=CH), 113.72 (CH₂CH=*C*H₂), 134.28 (CH₂*C*H=*C*H₂).

**1-bis(trimethylsiloxy)methylsilyipropane.** ¹H NMR (CDCl₃): δ = 0.00 (s, 3H, (OTMS)₂SiC*H*₃), 0.09 (s, 18H, OSi(C*H₃*)₃), 0.46 (m, 2H, SiC*H₂*CH₂CH₃), 0.95 (t, 3H, SiCH₂CH₂C*H₃*), 1.36 (m, 2H, SiCH₂C*H₂*CH₃). ¹³C {¹H} NMR (CDCl₃): δ = -0.07 ((OTMS)₂Si*C*H₃), 1.97 (OSi(*C*H₃)₃), 16.75 (SiCH₂*C*H₂CH₃), 18.05 (SiCH₂CH₂*C*H₃), 20.37 (Si*C*H₂CH₂CH₃).

### Characterization of Products of Example 36B:

**3-triethoxysilyl-1-propene.** ¹H NMR (CDCl₃): δ = 1.22 (t, 9H, OCH₂C*H₃*), 1.67 (d, 2H, SiC*H₂*CH=CH), 3.84 (q, 6H, OC*H*₂CH₃), 4.90-5.05 (d, 2H, CH₂CH=C*H₂*)*,* 5.81 (m, 1H, CH₂C*H*=CH₂). ¹³C {¹H} NMR (CDCl₃): δ = 18.36 (OCH₂*C*H₃), 19.34 (Si*C*H₂CH=CH), 58.73 (O*C*H₂CH₃), 114.85 (CH₂CH=*C*H₂), 132.80 (CH₂CH=*C*H₂).

**1-triethoxysilylpropane.** ¹H NMR (CDCl₃): δ = 0.63 (m, 2H, SiC*H₂*CH₂CH₃), 0.97 (t, 3H, SiC*H₂*CH₂CH₃), 1.22 (t, 9H, OCH₂C*H*₃), 1.45 (m, 2H, SiC*H₂*CH₂CH₃), 3.84 (q, 6H, O*CH*₂CH₃). ¹³C {¹H} NMR (CDC13): δ = 10.94 (SiCH₂CH₂CH₃), 12.92 (SiCH₂CH₂CH₃), 16.50 (SiCH₂CH₂CH₃), 18.43 (OCH₂*C*H₃), 58.40 (O*C*H₂CH₃).

### Characterization of Products of Example 36C:

**3-diethoxymethylsilyl-1-propene.** ¹H NMR (CDCl₃): δ = 0.11 (s, 3H, SiC*H₃*), 1.19 (t, 6H, OCH₂C*H₃*), 1.63 (d, 2H, SiC*H₂*CH=CH), 3.76 (q, 4H, OCH₂C*H₃*), 4.88 (d, 1H, CH₂CH=C(H)*H*), 4.93 (d, 1H, CH₂CH=C(*H*)H), 5.80 (m, 1H, CH₂C*H*=CH₂). ¹³C {¹H} NMR (CDC13): δ = -5.19 (Si*C*H₃), 18.44 (OCH₂*C*H₃), 21.92 (SiCH₂CH=CH), 58.41 (O*C*H₂CH₃), 114.45 (CH₂CH=*C*H₂), 133.36 (CH₂CH=*C*H₂).

**1-diethoxymethylsilylpropane**: ¹H NMR (CDCl₃): δ = 0.08 (s, 3H, SiC*H₃*), 0.59 (m, 2H, SiC*H₂*CH₂CH₃), 0.94 (t, 3H, SiC*H₂*CH₂CH₃), 1.19 (t, 6H, OCH₂C*H₃*), 1.38 (m, 2H, SiCH₂C*H₂*CH₃), 3.76 (q, 4H, OC*H₂*CH₃). ¹³C {¹H} NMR (CDCl₃): δ = -4.76 (Si*C*H₃), 16.37 (Si*C*H₂CH₂CH₃), 16.53 (SiCH₂*C*H₂CH₃), 18.07 (SiCH₂CH₂*C*H₃), 18.50 (OCH₂*C*H₃), 58.13 (O*C*H₂CH₃).

While the above description contains many specifics, these specifics should not be construed as limitations on the scope of the invention, but merely as exemplifications of preferred embodiments thereof. Those skilled in the art will envision many other possible variations that are within the scope of the invention as defined by the claims appended hereto.

## Claims

1. A process for producing a silylated product comprising reacting a mixture comprising (a) an unsaturated compound containing at least one unsaturated functional group, (b) a silyl hydride containing at least one silylhydride functional group, and (c) a catalyst, optionally in the presence of a solvent, to produce a dehydrogenative silylated product, a hydrosilylated product, or a combination of a dehydrogenative silylated product and a hydrosilylated product, wherein the catalyst is a complex of the Formula (I); 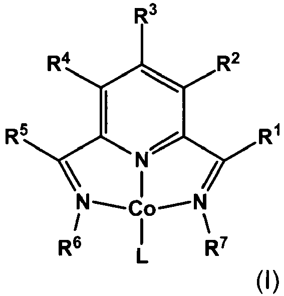
wherein each occurrence of R¹, R², R³, R⁴, and R⁵ is independently hydrogen, a C1-C18 alkyl, a C1-C18 cycloalkyl, a C1-C18 substituted alkyl, a C1-C18 substituted cycloalkyl, an aryl, a substituted aryl, or an inert substituent chosen from a halo or an ether including -OR⁹ wherein R⁹ is hydrocarbyl or substituted hydrocarbyl, R¹-R⁵, other than hydrogen, optionally contain at least one heteroatom, wherein the term substituted means containing one or more substituents, chosen from a halo or an ether including -OR⁹ wherein R⁹ is hydrocarbyl;
each occurrence of R⁶ and R⁷ is independently a C1-C18 alkyl, a C1-C18 cycloalkyl, a C1-C18 substituted alkyl, a C1-C18 substituted cycloalkyl, an aryl, or a substituted aryl, wherein R⁶ and R⁷ optionally contain at least one heteroatom, wherein the term substituted means containing one or more substituents, chosen from a halo or an ether including -OR⁹ wherein R⁹ is hydrocarbyl;
optionally any two of R¹, R², R³, R⁴, R⁵, R⁶, and R⁷ vicinal to one another taken together may form a ring being an unsubstituted, saturated, or unsaturated cyclic structure, and
L is CH₂SiR⁸₃ where each occurrence of R⁸ is independently a C1-10 alkyl, a C1-C10 cycloalkyl or an aryl group, where R⁸ optionally contains at least one heteroatom.

2. The process of claim 1, wherein R⁸ is CH₃.

3. The process of claim 1, wherein R⁶ and R⁷ are independently chosen from a C1-C10 alkyl or a C1 to C10 cycloalkyl.

4. The process of claim 3, wherein R⁶ and R⁷ are the same, chosen from either methyl, ethyl or cyclohexyl.

5. The process of claim 1, wherein R⁸ is methyl; R⁶ and R⁷ are independently chosen from a C1-C10 alkyl or C1-C10 cycloalkyl, and R², R³, and R⁴ are each hydrogen.

6. The process of claim 1, wherein the catalyst is chosen from: 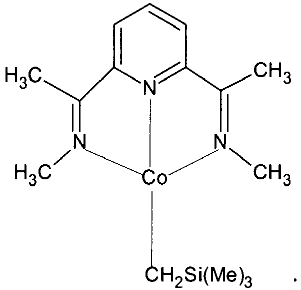 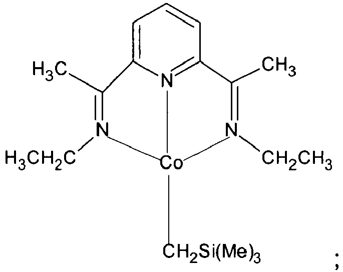 and 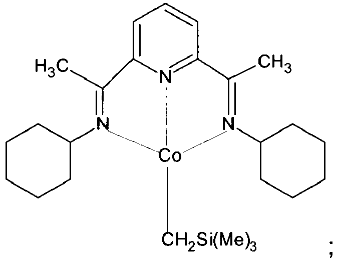 or a combination of two or more thereof.

7. The process of any of claims 1-6, wherein component (a) is chosen from an olefin, a cycloalkene, an unsaturated polyether, a vinyl-functional alkyl-capped allyl or methallyl polyether, a vinyl-functional cycloalkyl-capped allyl or methallyl polyether, an alkyl-capped terminally unsaturated amine, a cycloalkyl-capped terminally unsaturated amine, an alkyne, a terminally unsaturated acrylate or methacrylate, an unsaturated aryl ether, a vinyl-functionalized polymer or oligomer, a vinyl-functionalized silane, a vinyl-functionalized silicone, an unsaturated fatty acid, an unsaturated ester, or a combination of two or more thereof.

8. The process of any of claims 1-7, wherein component (a) is chosen from a compound of the formula:
R¹⁰(OCH₂CH₂)_{z}(OCH₂CHR¹¹)_{w}-OR¹²;
R¹²O(CHR¹¹CH₂O)_{w}(CH₂CH₂O)_{z}-CR¹³₂-C≡C-CR¹³₂-(OCH₂CH₂)_{z}(OCH₂CHR¹¹)_{w}R¹²;
H₂C=CR¹¹CH₂O(CH₂CH₂O)_{z}(CH₂CHR¹)_{w}CH₂CR¹³=CH₂;
or a combination of two or more thereof, wherein R¹⁰ is chosen from an unsaturated organic group containing from 2 to 10 carbon atoms; R¹² is chosen from hydrogen, a vinyl group, or a polyether capping group of from 1 to 8 carbon atoms; each occurrence of R¹¹ is independently chosen from a monovalent hydrocarbon group having 1-20 carbon atoms, an aryl group, an alkaryl, an aralkyl, a cycloalkyl group; each occurrence of R¹³ is independently chosen from hydrogen, a monovalent hydrocarbon group having 1-20 carbon atoms, an aryl group, an alkaryl group, an aralkyl group, or a cycloalkyl group; each occurrence of z is 0 to 100 inclusive; and, each occurrence of w is 0 to 100 inclusive; or,
wherein component (a) is chosen from N,N-dimethylallyl amine, allyloxy-substituted polyethers, propylene, 1-butene, 1-hexene, styrene,, vinylnorbornane, 5-vinyl-norbornene, 1-octadecene, cyclopentene, cyclohexene, norbornene, 3-hexene, isobutylene, 3-methyl-1-octene, polybutadiene, polyisoprene, EPDM, oleic acid, linoleic acid, methyl oleate, a vinyl siloxane of the Formula (VI), 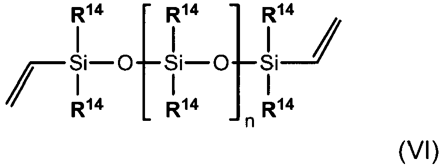 or a combination of two or more thereof, wherein each occurrence of R¹⁴ is independently a C1-C18 alkyl, C1-C18 cycloalkyl, C1-C18 substituted alkyl, a C1-C18 substituted cycloalkyl, vinyl, aryl, or a substituted aryl, and n is greater than or equal to zero, wherein the term substituted means containing one or more substituents, chosen from a halo or an ether including -OR⁹ wherein R⁹ is hydrocarbyl.

9. The process of any of claims 1-8, wherein component (b) is chosen from a compound of the formula RₐSiH₄₋ₐ, (RO)ₐSiH₄₋ₐ, HSiRₐ(OR)₃₋ₐ, R₃Si(CH₂)_{f}(SiR₂O)ₖSiR₂H, (RO)₃Si(CH₂)_{f}(SiR₂O)ₖSiR₂H, QᵤTᵥTₚ^{H}D_{w}D^{H}ₓM^{H}_{y}M_{z} , R₃Si(CH₂R)ₓSiOSiR₂(OSiR₂)_{y}OSiR₂H, or combinations of two or more thereof where each occurrence of R is independently a C1-C18 alkyl, a C1-C18 cycloalkyl, a C1-C18 substituted alkyl, a C1-C18 substituted cycloalkyl, wherein R optionally contains at least one heteroatom, each occurrence of a independently has a value from 0 to 3, f has a value of 1 to 8, k has a value of 1 to 11, each of p, u, v, y and z independently has a value from 0 to 20, w and x are from 0 to 3000, provided that p + x + y equals 1 to 1000 and the valences of the all the elements in the silyl hydride are satisfied, M represents a monofunctional group of formula R'₃SiO_{1/2}, D represents a difunctional group of formula R'₂SiO_{2/2}, T represents a trifunctional group of formula R'SiO_{3/2}, Q represents a tetrafunctional group of formula SiO_{4/2}, an M^{H} represents HR'₂SiO_{1/2}, T^{H} represents HSiO_{3/2}, and D^{H} represents R'HSiO_{2/2}; each occurrence of R' is independently C1-C18 alkyl, C1-C18 cycloalkyl, C1-C18 substituted alkyl, C1-C18 substituted cycloalkyl, wherein R' optionally contains at least one heteroatom; x is 1-8, and y is 0-10, wherein the term substituted means containing one or more substituents, chosen from a halo or an ether including -OR⁹ wherein R⁹ is hydrocarbyl.

10. The process of any of claims 1-9, wherein the catalyst is present in an amount of from 0.01 mole percent to 10 mole percent based on the molar quantity of the unsaturated compound to be reacted.

11. The process of any of claims 1-10, wherein the process is conducted at a temperature of between 0 °C and 300 °C.

12. The process of any of claims 1-11, wherein the complex is immobilized on a support, chosen from carbon, silica, alumina, MgCl₂, zirconia, polyethylene, polypropylene, polystyrene, poly(aminostyrene), sulfonated polystyrene, or a combination of two or more thereof.

13. A process for producing a crosslinked material, comprising reacting a mixture comprising (a) a silyl-hydride containing polymer, (b) a mono-unsaturated olefin or an unsaturated polyolefin, or combinations thereof and (c) a catalyst, optionally in the presence of a solvent, in order to produce the crosslinked material, wherein the catalyst is a complex of the Formula (I): 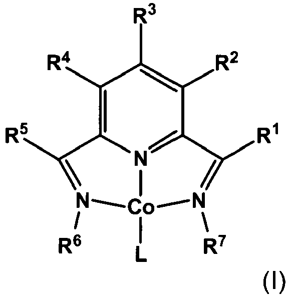
wherein each occurrence of R¹, R², R³, R⁴, and R⁵ is independently hydrogen, a C1-C18 alkyl, a C1-C18 cycloalkyl, a C1-C18 substituted alkyl, a C1-C18 substituted cycloalkyl, an aryl, a substituted aryl, or an inert substituent chosen from a halo or an ether including -OR⁹ wherein R⁹ is hydrocarbyl or substituted hydrocarbyl, wherein R¹-R⁵, other than hydrogen, optionally contain at least one heteroatom, wherein the term substituted means containing one or more substituents, chosen from a halo or an ether including -OR⁹ wherein R⁹ is hydrocarbyl;
each occurrence of R⁶ and R⁷ is independently a C1-C18 alkyl, a C1-C18 cycloalkyl, a C1-C18 substituted alkyl, a C1-C18 substituted cycloalkyl, aryl or substituted aryl, wherein R⁶ and R⁷ optionally contain at least one heteroatom, wherein the term substituted means containing one or more substituents, chosen from a halo or an ether including -OR⁹ wherein R⁹ is hydrocarbyl;
optionally any two of R¹, R², R³, R⁴, R⁵, R⁶, and R⁷ vicinal to one another taken together may form a ring being an unsubstituted, saturated, or unsaturated cyclic structure, and
L is CH₂SiR⁸₃ where each R⁸ is independently a C1-10 alkyl, a C1-C18 cycloalkyl, or aryl group optionally containing at least one heteroatom.

14. The process of claim 13 wherein the reaction is conducted under an inert atmosphere.

15. The process of any of claims 13-14, wherein the reaction is conducted in the presence of a solvent selected from the group consisting of hydrocarbons, halogenated hydrocarbons, ethers, and combinations thereof.

16. The process of any of claims 13-15, wherein the reaction is carried out at a temperature of 0° C. to 300° C.

17. The process of any of claims 13-16, wherein the catalyst is present in an amount of from 0.1 mol % to 5 mol %.

## Patentansprüche

1. Verfahren zum Herstellen eines silylierten Produkts, umfassend das Umsetzen eines Gemisches, umfassend (a) eine ungesättigte Verbindung, enthaltend mindestens eine ungesättigte funktionale Gruppe, (b) ein Silylhydrid, enthaltend mindestens eine Silylhydrid-funktionale Gruppe, und (c) einen Katalysator, gegebenenfalls in der Gegenwart eines Lösungsmittels, unter Herstellung eines dehydrogenativen silylierten Produkts, eines hydrosilylierten Produkts oder einer Kombination eines dehydrogenativen silylierten Produkts und eines hydrosilylierten Produkts, wobei der Katalysator ein Komplex der Formel (I) ist 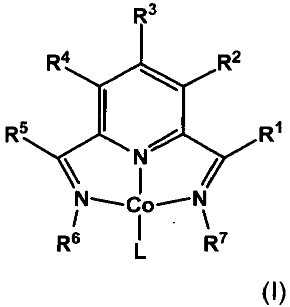
worin jedes Auftreten von R¹, R², R³, R⁴ und R⁵ unabhängig voneinander Wasserstoff, ein C1-C18 Alkyl, ein C1-C18 Cycloalkyl, ein C1-C18 substituiertes Alkyl, ein C1-C18 substituiertes Cycloalkyl, ein Aryl, ein substituiertes Aryl oder ein inerter Substituent, ausgewählt aus einem Halogen oder einem Ether einschließlich -OR⁹, wobei R⁹ ein Kohlenwasserstoffrest oder substituierter Kohlenwasserstoffrest ist, ist, R¹-R⁵, verschieden von Wasserstoff, gegebenenfalls mindestens ein Heteroatom erhält, wobei der Ausdruck substituiert bedeutet, ein oder mehrere Substituenten zu enthalten, ausgewählt aus einem Halogen oder einem Ether einschließlich -OR⁹, wobei R⁹ Kohlenwasserstoffrest ist, jedes Auftreten von R⁶ und R⁷ unabhängig voneinander ein C1-C18 Alkyl, ein C1-C18 Cycloalkyl, ein C1-C18 substituiertes Alkyl, ein C1-C18 substituiertes Cycloalkyl, ein Aryl oder ein substituiertes Aryl ist, wobei R⁶ und R⁷ gegebenenfalls mindestens ein Heteroatom enthalten, wobei der Ausdruck substituiert bedeutet, ein oder mehrere Substituenten zu enthalten, ausgewählt aus einem Halogen oder einem Ether einschließlich -OR⁹, wobei R⁹ Kohlenwasserstoffrest ist,
gegebenenfalls jedwede zwei von R¹, R², R³, R⁴, R⁵, R⁶ und R⁷ vicinal zueinander genommen einen Ring bilden können, der eine unsubstituierte, gesättige oder ungesättigte cyclische Struktur ist, und
L CH₂SiR⁸₃ ist, wobei jedes Auftreten von R⁸ unabhängig voneinander ein C1-10 Alkyl, ein C1-C10 Cycloalkyl oder eine Arylgruppe ist, wobei R⁸ gegebenenfalls mindestens ein Heteroatom enthält.

2. Verfahren gemäß Anspruch 1, wobei R⁸ CH₃ ist.

3. Verfahren gemäß Anspruch 1, wobei R⁶ und R⁷ unabhängig voneinander aus einem C1-C10 Alkyl oder einem C1-C10 Cycloalkyl ausgewählt sind.

4. Verfahren gemäß Anspruch 3, wobei R⁶ und R⁷ die gleichen sind, ausgewählt aus entweder Methyl, Ethyl oder Cyclohexyl.

5. Verfahren gemäß Anspruch 1, wobei R⁸ Methyl ist, R⁶ und R⁷ unabhängig voneinander aus einem C1-C10 Alkyl oder C1-C10 Cycloalkyl ausgewählt sind und R², R³ und R⁴ jeweils Wasserstoff sind.

6. Verfahren gemäß Anspruch 1, wobei der Katalysator ausgewählt ist aus: 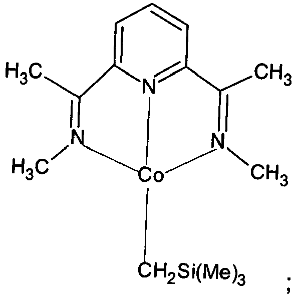 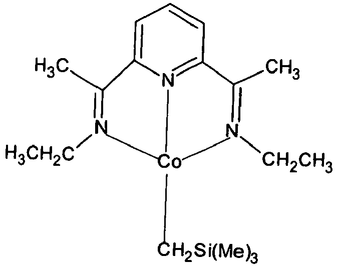 und 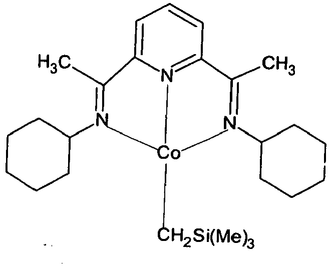 oder einer Kombination von zwei oder mehreren davon.

7. Verfahren gemäß einem der Ansprüche 1-6, wobei die Komponente (a) ausgewählt ist aus einem Olefin, einem Cycloalken, einem ungesättigten Polyether, einem Vinyl-funktionalen Alkyl-verkappten Allyl- oder Methallylpolyether, einem Vinyl-funktionalen Cycloalkyl-verkappten Allyl- oder Methallylpolyether, einem Alkyl-verkappten terminalen ungesättigten Amin, einem Cycloalkyl-verkappten terminalen ungesättigten Amin, einem Alkin, einem terminal ungesättigten Acrylat oder Methacrylat, einem ungesättigten Arylether, einem vinylfunktionalisierten Polymer oder Oligomer, einem vinylfunktionalisierten Silan, einem vinylfunktionalisierten Silikon, einer ungesättigten Fettsäure, einem ungesättigten Ester oder einer Kombination von zwei oder mehreren davon.

8. Verfahren gemäß einem der Ansprüche 1-7, wobei die Komponente (a) ausgewählt ist aus einer Verbindung der Formel:
R¹⁰(OCH₂CH₂)_{z}(OCH₂CHR¹¹)_{w}-OR¹²;
R¹²O(CHR¹¹CH₂O)_{w}(CH₂CH₂O)_{z}CR¹³₂-C≡C-CR¹³₂-(OCH₂CH₂)_{z}(OCH₂CHR¹¹)_{w}R¹²;
H₂C=CR¹¹CH₂O(CH₂CH₂O)_{z}(CH₂CHR¹¹)_{w}CH₂CR¹³=CH₂;
oder einer Kombination von zwei oder mehreren davon, wobei R¹⁰ aus einer ungesättigten organischen Gruppe enthaltend von 2 bis 10 Kohlenstoffatomen ausgewählt ist, R¹² aus Wasserstoff, einer Vinylgruppe oder einer Polyetherverkappenden Gruppe mit von 1 bis 8 Kohlenstoffatomen ausgewählt ist, wobei jedes Auftreten von R¹¹ unabhängig voneinander ausgewählt ist aus einer einwertigen Kohlenwasserstoffgruppe mit 1 bis 20 Kohlenstoffatomen, einer Arylgruppe, einem Alkaryl, einem Aralkyl, einer Cycloalkylgruppe, jedes Auftreten von R¹³ unabhängig voneinander ausgewählt ist aus Wasserstoff, einer einwertigen Kohlenwasserstoffgruppe mit 1 bis 20 Kohlenstoffatomen, einer Arylgruppe, einer Alkarylgruppe, einer Aralkylgruppe oder einer Cycloalkylgruppe, wobei jedes Auftreten von z 0 bis 100 einschließlich ist, und jedes Auftreten von w 0 bis 100 einschließlich ist, oder
wobei Komponente (a) ausgewählt ist aus N,N-Dimethylallylamin, Allyloxysubstituierten Polyethern, Propylen, 1-Buten, 1-Hexen, Styrol, Vinylnorbornan, 5-Vinyl-Norbornen, 1-Octadecen, Cyclopenten, Cyclohexen, Norbornen, 3-Hexen, Isobutylen, 3-Methyl-1-octen, Polybutadien, Polyisopren, EPDM, Ölsäure, Linolsäure, Methyloleat, einem Vinylsiloxan der Formel (VI), 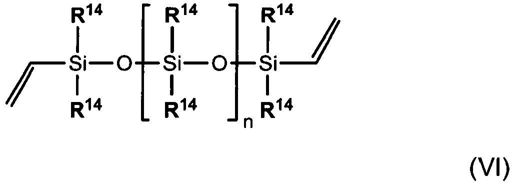 oder einer Kombination von zwei oder mehreren davon, wobei jedes Auftreten von R¹⁴ unabhängig voneinander ein C1-C18 Alkyl, C1-C18 Cycloalkyl, C1-C18 substituiertes Alkyl, ein C1-C18 substituiertes Cycloalkyl, Vinyl, Aryl oder ein substituiertes Aryl ist, und n größer als oder gleich Null ist, wobei der Ausdruck substituiert bedeutet, ein oder mehrere Substituenten zu enthalten, ausgewählt aus einem Halogen oder einem Ether einschließlich -OR⁹, wobei R⁹ Kohlenwasserstoff ist.

9. Verfahren gemäß einem der Ansprüche 1-8, wobei die Komponente (b) ausgewählt ist aus einer Verbindung der Formel RₐSiH₄₋ₐ, (RO)ₐSiH₄₋ₐ, HSiRₐ(OR)₃₋ₐ, R₃Si(CH₂)_{f}(SiR₂O)ₖSiR₂H, (RO)₃Si(CH₂)_{f}(SiR₂O)ₖSiR₂H, QᵤTᵥTₚ^{H}D_{w}D^{H}ₓM^{H}_{y}M_{z}, R₃Si(CH₂R)ₓSiOSiR₂(OSiR₂)_{y}OSiR₂H oder einer Kombination von zwei oder mehreren davon, wobei jedes Auftreten von R unabhängig voneinander ein C1-C18 Alkyl, ein C1-C18 Cycloalkyl, ein C1-C18 substituiertes Alkyl, ein C1-C18 substituiertes Cycloalkyl ist, wobei R gegebenenfalls mindestens ein Heteroatom enthält, wobei jedes Auftreten von a unabhängig voneinander einen Wert von 0 bis 3 aufweist, f einen Wert von 1 bis 8 aufweist, k einen Wert von 1 bis 11 aufweist, jedes von p, u, v, y und z unabhängig voneinander einen Wert von 0 bis 20 aufweist, w und x von 0 bis 3000 sind, mit der Maßgabe, daß p + x + y 1 bis 1000 entspricht und die Valenzen von sämtlichen der Elemente in dem Silylhydrid erfüllt sind, M eine monofunktionale Gruppe der Formel R'₃SiO_{1/2} darstellt, D eine difunktionale Gruppe der Formel R'₂SiO_{2/2} darstellt, T eine trifunktionale Gruppe der Formel R'SiO_{3/2} darstellt, Q eine tetrafunktionale Gruppe der Formel SeiO_{4/2} darstellt, ein M^{H} HR'₂SiO_{1/2} darstellt, T_{H} HSiO_{3/2} darstellt und D^{H} R'HSiO_{2/2} darstellt, jedes Auftreten von R' unabhängig voneinander C1-C18 Alkyl, C1-C18 Cycloalkyl, C1-C18 substituiertes Alkyl, C1-C18 substituiertes Alkyl, C1-C18 substituiertes Cycloalkyl ist, wobei R' gegebenenfalls mindestens ein Heteroatom enthält, x 1-8 ist und y 0-10 ist, wobei der Ausdruck substituiert bedeutet, ein oder mehrere Substituenten zu enthalten, ausgewählt aus einem Halogen oder einem Ether einschließlich -OR⁹, wobei R⁹ Kohlenwasserstoff ist.

10. Verfahren gemäß einem der Ansprüche 1-9, wobei der Katalysator in einer Menge von 0,01 Mol-% bis 10 Mol-%, bezogen auf die molare Menge der umzusetzenden ungesättigten Verbindung, vorliegt.

11. Verfahren gemäß einem der Ansprüche 1-10, wobei das Verfahren bei einer Temperatur von zwischen 0°C und 300°C durchgeführt wird.

12. Verfahren gemäß einem der Ansprüche 1-11, wobei der Komplex auf einem Träger, ausgewählt aus Kohlenstoff, Silica, Aluminiumoxid, MgCl₂, Zirkoniumoxid, Polyethylen, Polypropylen, Polystyrol, Poly(aminostyrol), sulfoniertem Polystyrol oder einer Kombination von zwei oder mehreren davon, immobilisiert ist.

13. Verfahren zum Herstellen eines vernetzten Materials, umfassend das Umsetzen eines Gemisches, umfassend (a) ein Silylhydrid-enthaltendes Polymer, (b) ein mono-ungesättigtes Olefin oder ein ungesättigtes Polyolefin oder Kombinationen davon und (c) einen Katalysator, gegebenenfalls in der Gegenwart eines Lösungsmittels, um das vemetzte Material herzustellen, wobei der Katalysator ein Komplex der Formel (I) ist: 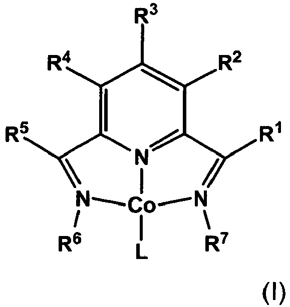
worin jedes Auftreten von R¹, R², R³, R⁴ und R⁵ unabhängig voneinander Wasserstoff, ein C1-C18 Alkyl, ein C1-C18 Cycloalkyl, ein C1-C18 substituiertes Alkyl, ein C1-C18 substituiertes Cycloalkyl, ein Aryl, ein substituiertes Aryl oder ein inerter Substituent, ausgewählt aus einem Halogen oder einem Ether einschließlich -OR⁹, wobei R⁹ ein Kohlenwasserstoffrest oder substituierter Kohlenwasserstoffrest ist, ist, R¹-R⁵, verschieden von Wasserstoff, gegebenenfalls mindestens ein Heteroatom erhält, wobei der Ausdruck substituiert bedeutet, ein oder mehrere Substituenten zu enthalten, ausgewählt aus einem Halogen oder einem Ether einschließlich -OR⁹, wobei R⁹ Kohlenwasserstoffrest ist, jedes Auftreten von R⁶ und R⁷ unabhängig voneinander ein C1-C18 Alkyl, ein C1-C18 Cycloalkyl, ein C1-C18 substituiertes Alkyl, ein C1-C18 substituiertes Cycloalkyl, ein Aryl oder ein substituiertes Aryl ist, wobei R⁶ und R⁷ gegebenenfalls mindestens ein Heteroatom enthalten, wobei der Ausdruck substituiert bedeutet, ein oder mehrere Substituenten zu enthalten, ausgewählt aus einem Halogen oder einem Ether einschließlich -OR⁹, wobei R⁹ Kohlenwasserstoffrest ist,
gegebenenfalls jedwede zwei von R¹, R², R³, R⁴, R⁵, R⁶ und R⁷ vicinal zueinander genommen einen Ring bilden können, der eine unsubstituierte, gesättige oder ungesättigte cyclische Struktur ist, und
L CH₂SiR⁸₃ ist, wobei jedes Auftreten von R⁸ unabhängig voneinander ein C1-10 Alkyl, ein C1-C10 Cycloalkyl oder eine Arylgruppe ist, wobei R⁸ gegebenenfalls mindestens ein Heteroatom enthält.

14. Verfahren gemäß Anspruch 13, wobei die Reaktion unter einer inerten Atmosphäre durchgeführt wird.

15. Verfahren gemäß einem der Ansprüche 13-14, wobei die Reaktion in der Gegenwart eines Lösungsmittels, ausgewählt aus der Gruppe, bestehend aus Kohlenwasserstoffen, halogenierten Kohlenwasserstoffen, Ethern und Kombinationen davon, durchgeführt wird.

16. Verfahren gemäß einem der Ansprüche 13-15, wobei die Reaktion bei einer Temperatur von 0°C bis 300°C durchgeführt wird.

17. Verfahren gemäß einem der Ansprüche 13-16, wobei der Katalysator in einer Menge von 0,1 Mol-% bis 5 Mol-% vorliegt.

## Revendications

1. Procédé de production d'un produit silylé comprenant mettre à réagir un mélange comprenant (a) un composé insaturé contenant au moins un groupe fonctionnel insaturé, (b) un hydrure de silyle contenant au moins un groupe fonctionnel d'hydrure de silyle, et (c) un catalyseur, en option en présence d'un solvant, pour produire un produit silylé déshydrogénant, un produit hydrosilylé ou une combinaison d'un produit silylé déshydrogénant et d'un produit hydrosilylé, dans lequel le catalyseur est un complexe de la Formule (I) : 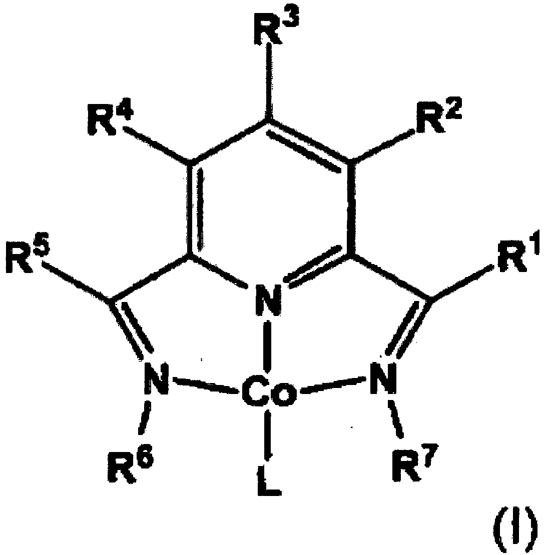
dans laquelle chaque occurrence de R¹, R², R³, R⁴ et R⁵ est indépendamment hydrogène, un alkyle en C1-C18, un cycloalkyle en C1-C18, un alkyle substitué en C1-C18, un cycloalkyle substitué en C1-C18, un aryle, un aryle substitué ou un substituant inerte choisi parmi un halogéno ou un éther incluant -OR⁹, dans laquelle R⁹ est hydrocarbyle ou hydrocarbyle substitué, R¹ à R⁵, autres qu'hydrogène, contiennent en option au moins un hétéroatome, dans lequel le terme substitué signifie contenant un ou plusieurs substituants, choisis parmi un halogéno ou un éther incluant -OR⁹, dans laquelle R⁹ est hydrocarbyle ;
chaque occurrence de R⁶ et R⁷ est indépendamment un alkyle en C1-C18, un cycloalkyle en C1-C18, un alkyle substitué en C1-C18, un cycloalkyle substitué en C1-C18, un aryle ou un aryle substitué, dans laquelle R⁶ et R⁷ contiennent en option au moins un hétéroatome, dans lequel le terme substitué signifie contenant un ou plusieurs substituants, choisis parmi un halogéno ou un éther incluant -OR⁹, dans laquelle R⁹ est hydrocarbyle ;
en option deux éléments quelconques parmi R¹, R², R³, R⁴, R⁵, R⁶ et R⁷, vicinaux les uns aux autres, pris ensemble, peuvent former un anneau qui est une structure cyclique non substituée, saturée ou insaturée, et
L est CH₂SiR⁸₃ où chaque occurrence de R⁸ est indépendamment un alkyle en C1-C10, un cycloalkyle en C1-C10 ou un groupe aryle, où R⁸ contient en option au moins un hétéroatome.

2. Procédé selon la revendication 1, dans lequel R⁸ est CH₃.

3. Procédé selon la revendication 1, dans lequel R⁶ et R⁷ sont indépendamment choisis parmi un alkyle en C1-C10 ou un cycloalkyle en C1 à C10.

4. Procédé selon la revendication 3, dans lequel R⁶ et R⁷ sont identiques, choisis parmi méthyle, éthyle ou cyclohexyle.

5. Procédé selon la revendication 1, dans lequel R⁸ est méthyle; R⁶ et R⁷ sont indépendamment choisis parmi un alkyle en C1-C10 ou un cycloalkyle en C1-C10, et R², R³ et R⁴ sont chacun hydrogène.

6. Procédé selon la revendication 1, dans lequel le catalyseur est choisi parmi : 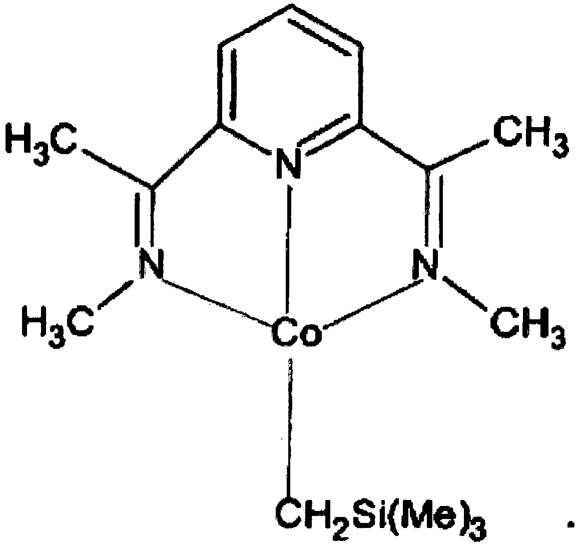 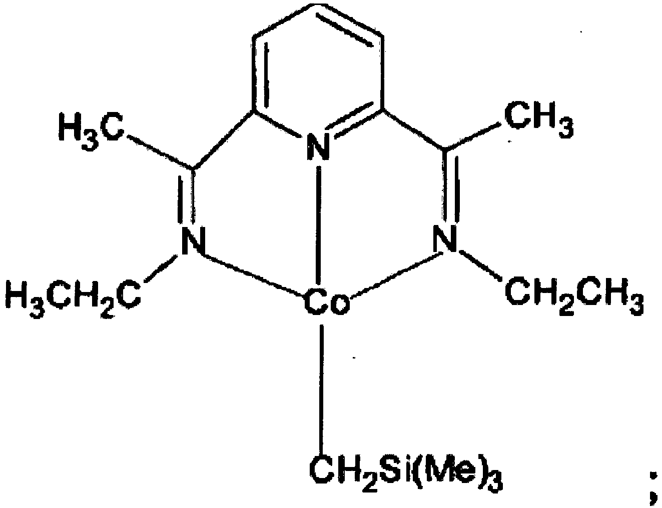 et 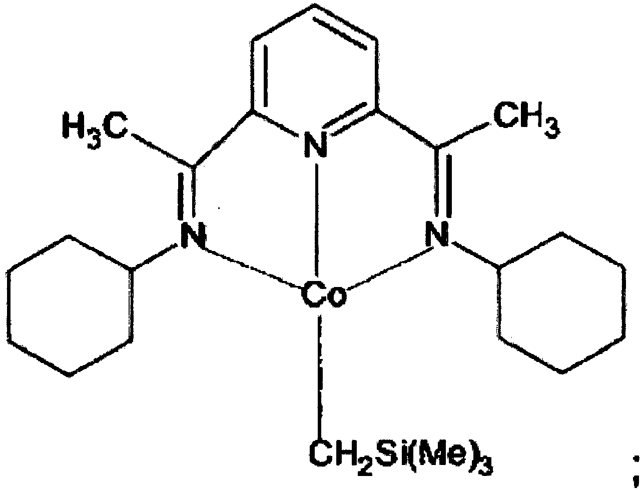 ou une combinaison de deux ou plus de ceux-ci.

7. Procédé selon l'une quelconque des revendications 1 à 6, dans lequel le composant (a) est choisi parmi une oléfine, un cycloalkène, un polyéther insaturé, un polyéther d'allyle ou de méthallyle à fonction vinyle, coiffé par un alkyle, un polyéther d'allyle ou de méthallyle à fonction vinyle, coiffé par un cycloalkyle, une amine à insaturation terminale, coiffée par un alkyle, une amine à insaturation terminale, coiffée par un cycloalkyle, un alcyne, un acrylate ou méthacrylate à insaturation terminale, un éther d'aryle insaturé, un polymère ou oligomère à fonction vinyle, un silane à fonction vinyle, un silicone à fonction vinyle, un acide gras insaturé, un ester insaturé ou une combinaison de deux ou plus de ceux-ci.

8. Procédé selon l'une quelconque des revendications 1 à 7, dans lequel le composant (a) est choisi parmi un composé de la formule :
R¹⁰(OCH₂CH₂)_{z}(OCH₂CHR¹¹)_{w}-OR¹² ;
R¹²O(CHR¹¹CH₂O)_{w}(CH₂CH₂O)_{z}-CR¹³₂-C≡C-CR¹³₂-(OCH₂CH₂)_{z}(OCH₂CHR¹¹)_{w}R¹²;
H₂C=CR¹¹CH₂O(CH₂CH₂O)_{z}(CH₂CHR¹¹)_{w}CH₂CR¹³=CH₂;
ou une combinaison de deux ou plus de ceux-ci, dans laquelle R¹⁰ est choisi parmi un groupe organique insaturé contenant 2 à 10 atomes de carbone ; R¹² est choisi parmi hydrogène, un groupe vinyle ou un groupe de coiffage de polyéther constitué de 1 à 8 atomes de carbone ; chaque occurrence de R¹¹ est indépendamment choisie parmi un groupe d'hydrocarbure monovalent ayant 1 à 20 atomes de carbone, un groupe aryle, un alkaryle, un aralkyle, un groupe cycloalkyle ; chaque occurrence de R¹³ est indépendamment choisie parmi hydrogène, un groupe d'hydrocarbure monovalent ayant 1 à 20 atomes de carbone, un groupe aryle, un groupe alkaryle, un groupe aralkyle ou un groupe cycloalkyle ; chaque occurrence de z vaut de 0 à 100 inclus ; et chaque occurrence de w vaut de 0 à 100 inclus ; ou
dans lequel le composant (a) est choisi parmi la N,N-diméthylallylamine, des polyéthers substitués par allyloxy, le propylène, le 1-butène, le 1-hexène, le styrène, le vinylnorbornane, le 5-vinyl-norbornène, le 1-octadécène, le cyclopentène, le cyclohexène, le norbornène, le 3-hexène, l'isobutylène, le 3-méthyl-1-octène, le polybutadiène, le polyisoprène, l'EPDM, l'acide oléique, l'acide linoléique, l'oléate de méthyle, un vinylsiloxane de la Formule (VI) 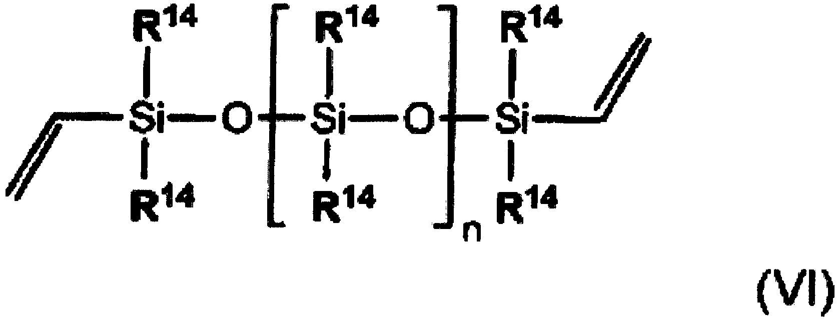 ou une combinaison de deux ou plus de ceux-ci, dans laquelle chaque occurrence de R¹⁴ est indépendamment un alkyle en C1-C18, cycloalkyle en C1-C18, alkyle substitué en C1-C18, un cycloalkyle substitué en C1-C18, vinyle, aryle ou un aryle substitué, et n est supérieur ou égal à zéro, dans lequel le terme substitué signifie contenant un ou plusieurs substituants, choisis parmi un halogéno ou un éther incluant -OR⁹, dans laquelle R⁹ est hydrocarbyle.

9. Procédé selon l'une quelconque des revendications 1 à 8, dans lequel le composant (b) est choisi parmi un composé de la formule RₐSiH₄₋ₐ, (RO)ₐSiH₄₋ₐ, HSiRₐ(OR)₃₋ₐ, R₃Si(CH₂)_{f}(SiR₂O)ₖSiR₂H, (RO)₃Si(CH₂)_{f}(SiR₂O)ₖSiR₂H, QᵤTᵥTₚ^{H}D_{w}D^{H}ₓM^{H}_{y}M_{z}, R₃Si(CH₂R)ₓSiOSiR₂(OSiR₂)_{y}OSiR₂H, ou des combinaisons de deux ou plus de ceux-ci, où chaque occurrence de R est indépendamment un alkyle en C1-C18, un cycloalkyle en C1-C18, un alkyle substitué en C1-C18, un cycloalkyle substitué en C1-C18, dans laquelle R contient en option au moins un hétéroatome, chaque occurrence de a a indépendamment une valeur de 0 à 3, f a une valeur de 1 à 8, k a une valeur de 1 à 11, chacun de p, u, v, y et z a indépendamment une valeur de 0 à 20, w et x valent de 0 à 3000, à condition que p + x +y soit égal à 1 à 1000 et les valences de tous les éléments dans l'hydrure de silyle soient satisfaites, M représente un groupe monofonctionnel de formule R'₃SiO_{1/2}, D représente un groupe difonctionnel de formule R'₂SiO_{2/2}, T représente un groupe trifonctionnel de formule R'SiO_{3/2}, Q représente un groupe tétrafonctionnel de formule SiO_{4/2}, un M^{H} représente HR'₂SiO_{1/2}, T^{H} représente HSiO_{3/2} et D^{H} représente R'HSiO_{2/2} ; chaque occurrence de R' est indépendamment alkyle en C1-C18, cycloalkyle en C1-C18, alkyle substitué en C1-C18, cycloalkyle substitué en C1-C18, dans laquelle R' contient en option au moins un hétéroatome ; x vaut de 1 à 8 et y vaut de 0 à 10, dans lequel le terme substitué signifie contenant un ou plusieurs substituants, choisis parmi un halogéno ou un éther incluant -OR⁹, dans laquelle R⁹ est hydrocarbyle.

10. Procédé selon l'une quelconque des revendications 1 à 9, dans lequel le catalyseur est présent en une quantité de 0,01 pourcent molaire à 10 pourcent molaire en fonction de la quantité molaire du composé insaturé devant être mis à réagir.

11. Procédé selon l'une quelconque des revendications 1 à 10, dans lequel le procédé est mené à une température comprise entre 0°C et 300°C.

12. Procédé selon l'une quelconque des revendications 1 à 11, dans lequel le complexe est immobilisé sur un support, choisi parmi le carbone, la silice, l'alumine, MgCl₂, la zircone, le polyéthylène, le polypropylène, le polystyrène, le poly(aminostyrène), le polystyrène sulfoné ou une combinaison de deux ou plus de ceux-ci.

13. Procédé de production d'un matériau à réticulation croisée, comprenant mettre à réagir un mélange comprenant (a) un polymère contenant un hydrure de silyle, (b) une oléfine mono-insaturée ou une polyoléfine insaturée, ou des combinaisons de celles-ci, et (c) un catalyseur, en option en présence d'un solvant, afin de produire le matériau à réticulation croisée, dans lequel le catalyseur est un complexe de la Formule (I) : 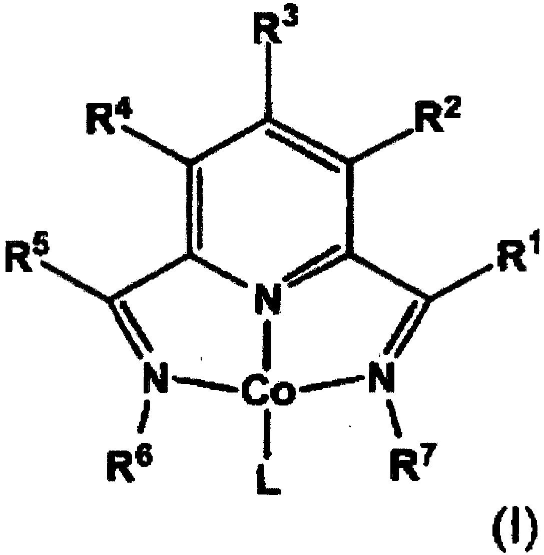
dans laquelle chaque occurrence de R¹, R², R³, R⁴ et R⁵ est indépendamment hydrogène, un alkyle en C1-C18, un cycloalkyle en C1-C18, un alkyle substitué en C1-C18, un cycloalkyle substitué en C1-C18, un aryle, un aryle substitué ou un substituant inerte choisi parmi un halogéno ou un éther incluant -OR⁹, dans laquelle R⁹ est hydrocarbyle ou hydrocarbyle substitué, dans laquelle R¹ à R⁵, autres qu'hydrogène, contiennent en option au moins un hétéroatome, dans lequel le terme substitué signifie contenant un ou plusieurs substituants, choisis parmi un halogéno ou un éther incluant -OR⁹, dans laquelle R⁹ est hydrocarbyle ;
chaque occurrence de R⁶ et R⁷ est indépendamment un alkyle en C1-C18, un cycloalkyle en C1-C18, un alkyle substitué en C1-C18, un cycloalkyle substitué en C1-C18, aryle ou aryle substitué, dans laquelle R⁶ et R⁷ contiennent en option au moins un hétéroatome, dans lequel le terme substitué signifie contenant un ou plusieurs substituants, choisis parmi un halogéno ou un éther incluant -OR⁹, dans laquelle R⁹ est hydrocarbyle ;
en option deux éléments quelconques parmi R¹, R², R³, R⁴, R⁵, R⁶ et R⁷, vicinaux les uns aux autres, pris ensemble, peuvent former un anneau qui est une structure cyclique non substituée, saturée ou insaturée, et
L est CH₂SiR⁸₃ où chaque R⁸ est indépendamment un alkyle en C1-C10, un cycloalkyle en C1-C18 ou un groupe aryle contenant en option au moins un hétéroatome.

14. Procédé selon la revendication 13, dans lequel la réaction est menée dans une atmosphère inerte.

15. Procédé selon l'une quelconque des revendications 13 et 14, dans lequel la réaction est menée en présence d'un solvant sélectionné parmi le groupe constitué d'hydrocarbures, d'hydrocarbures halogénés, d'éthers et de combinaisons de ceux-ci.

16. Procédé selon l'une quelconque des revendications 13 à 15, dans lequel la réaction est effectuée à une température de 0°C à 300°C.

17. Procédé selon l'une quelconque des revendications 13 à 16, dans lequel le catalyseur est présent en une quantité de 0,1 % molaire à 5 % molaire.
